(19) Europäisches Patentamt / European Patent Office / Office européen des brevets

(11) **EP 4 626 246 B1**

(12) **EUROPEAN PATENT SPECIFICATION**

(45) Date of publication and mention
of the grant of the patent:
**22.07.2026  Bulletin 2026/30**

(21) Application number: **23813742.6**

(22) Date of filing: **29.11.2023**

(51) International Patent Classification (IPC):
*A23G 9/04* $^{(2006.01)}$        *A23G 9/32* $^{(2006.01)}$
*A23G 9/38* $^{(2006.01)}$        *A23G 9/42* $^{(2006.01)}$

(52) Cooperative Patent Classification (CPC):
**A23G 9/327; A23G 9/04; A23G 9/38; A23G 9/42**

(86) International application number:
**PCT/EP2023/083485**

(87) International publication number:
**WO 2024/115543 (06.06.2024 Gazette 2024/23)**

(54) **VEGAN ICE CREAM FORMULATION**

VEGANE SPEISEEISFORMULIERUNG

FORMULATION DE CREME GLACEE VEGAN

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.11.2022  EP 22210642**

(43) Date of publication of application:
**08.10.2025  Bulletin 2025/41**

(73) Proprietor: **Bunge Loders Croklaan B.V.
1521 AZ Wormerveer (NL)**

(72) Inventor: **VERKUIJL, Bastiaan Jeroen Victor
1521 AZ Wormerveer (NL)**

(74) Representative: **Potter Clarkson
Chapel Quarter
Mount Street
Nottingham NG1 6HQ (GB)**

(56) References cited:
WO-A1-2017/001265        WO-A1-2017/001266
WO-A1-2017/001267        WO-A1-2018/191629
CN-A- 112 715 738

**Description**

This invention relates to a vegan ice cream formulation and a process of making the ice cream formulation.

**Background**

The listing or discussion of an apparently prior-published document in this specification should not necessarily be taken as an acknowledgement that the document is part of the state of the art or is common general knowledge.

Although many consumers appreciate frozen confections such as ice creams, some desire to have a choice of frozen confections with somewhat different ingredients. In particular, some consumers would like the option of frozen confections with fewer or no milk-based ingredients such as milk fat, milk protein and milk sugar.

Some consumers wish to avoid milk-based ingredients because of allergies or intolerances. Others prefer to avoid animal-based products for ethical or environmental reasons. Still others are concerned about the levels of cholesterol and saturated fat in milk and cream. Finally, some consumers would prefer products made from less expensive ingredients.

Frozen confections or other food products wherein part or all of dairy ingredients have been replaced with plant-based ingredients have been described in the patent literature.

WO 2017/001266 relates to a frozen confection which contains low amounts of protein and which aims to minimize ingredients of animal original, such as milk-based ingredients. The frozen confection comprises 2-8 wt% or 0-1% triglyceride oil, 1.5 wt% or less protein, wherein the total protein comprises between 25 and 100% protein from vegetable sources, 10-40 wt% sugar solids, 0-1 wt% emulsifier and 0-1 wt% stabilizer.

WO 2017/001267 relates to a frozen confection which is essentially free of ingredients of animal origin, such as milk ingredients, yet which includes protein.

The frozen confection comprises 1-20 wt% triglyceride oil, 0.5-15 wt% total protein, 10-40 wt% sugar solids and 0-1 wt% emulsifier and 0-1 wt% stabilizer, wherein the protein comprises at least one cereal protein such as oat protein and at least one pulse protein such as pea protein.

WO 2017/001265 relates to a frozen confection which need not include any ingredients of animal origin, such as milk ingredients. The frozen confection includes a saturated oil, such as coconut oil, a vegetable protein such as pea protein or lentil protein, nut solids such as almond solids or coconut, sugar solids, emulsifier and stabilizer. The frozen confection comprises 6-10 wt% saturated oil, 0.5-4 wt% vegetable protein, 1-8 wt% nut solids, 10-25 wt% sugar solids, and 0-1 wt% emulsifier and 0-1 wt% stabilizer.

KR 10-2016-0057691 relates to a vegetable ice cream in which milk fat is replaced with cocoa butter and coconut oil, and milk powder is replaced with pea protein.

CN112715738 describes a plant-based frozen beverage and a preparation method thereof. The plant-based frozen beverage is prepared from the following components in parts by mass: 80-180 parts of sweetening material, 100-250 parts of coconut milk; 10-40 parts of pea protein powder; 5-50 parts of inulin; 10-80 parts of vegetable oil; 4-6 parts of a stabilizer; wherein the stabilizer is a mixture of monoglyceride and diglyceride fatty acid ester, guar gum, locust bean gum, sodium alginate and xanthan gum.

Existing vegan frozen confections, due to the replacement of milk-based ingredients with plant-based ingredients, do not have the same properties as conventional milk-based frozen confections. In particular, the vegan frozen confections of the prior art have different macroscopic melting behavior and organoleptic properties, such as in-mouth melting behavior, hardness, flavor intensity, flavor release and sweetness, compared to milk-based frozen confections. This is undesirable for many consumers, who desire vegan frozen confections to be highly similar to or indistinguishable from their milk-based counterparts.

There therefore remains a need for a vegan frozen confection, particularly a vegan ice cream, which is a suitable replacement for milk-based frozen confections and closely mimics the dairy-based ice cream in terms of appearance, texture and taste, and which has improved macroscopic melting behavior and excellent organoleptic properties compared to existing vegan frozen confections.

**Description of the invention**

According to the present invention, there is provided a vegan ice cream formulation comprising a fat composition in an amount of from 1% to 30% by weight, a plant-based protein in an amount of from 0.1% to 20% by weight, a sweetener in an amount of from 5% to 35% by weight, and water in an amount of from 45% to 85% by weight; wherein the fat composition comprises from 18.0% to 45.0% by weight of lauric acid (C12:0); from 5.0% to 20.0% by weight of palmitic acid (C16:0); from 4.0% to 18.0% by weight of stearic acid (C18:0); a weight ratio of lauric acid (C12:0) to stearic acid (C18:0) of from 2.0 to 4.5; and a weight ratio of lauric acid (C12:0) to palmitic acid (C16:0) of from 1.5 to 5.0; said percentages of acid referring to acids bound as acyl groups in glycerides in the fat composition and being based on the total weight of C8 to C24 fatty acids; wherein the fat composition comprises an interesterified fat blend of at least a lauric fat; and wherein the lauric fat in the blend is at least 50% by weight of the blend .

Fat Compositions of the vegan ice cream formulation according to the invention

According to the present invention, there is provided a fat composition of the vegan ice cream formulation according to the invention comprising: from 18.0% to 45.0% by weight of lauric acid (C12:0); from 5.0% to 20.0% by weight of palmitic acid (C16:0); from 4.0% to 18.0% by weight of stearic acid (C18:0); a weight ratio of lauric acid (C12:0) to stearic acid (C18:0) of from 2.0 to 4.5; and a weight ratio of lauric acid (C12:0) to palmitic acid (C16:0) of from 1.5 to 5.0; said percentages of acid referring to acids bound as acyl groups in glycerides in the fat composition and being based on the total weight of C8 to C24 fatty acids; wherein the fat composition comprises an interesterified fat blend of at least a lauric fat; and wherein the lauric fat in the blend is at least 50% by weight of the blend.

The fat composition of the vegan ice cream according to the invention has been found to be particularly useful in a vegan ice cream formulation together with other ingredients such as a plant-based protein and a sweetener having improved macroscopic melting behavior and sensory properties, in particular hardness, smoothness, sweetness and creaminess, compared to other vegan ice cream formulations. In particular, it is believed that due to the fatty acid composition such as lauric acid, palmitic acid and stearic acid contents and the triglyceride composition as defined in the fat composition of the vegan ice cream according to the invention, the vegan ice cream formulations according to the invention typically have comparable properties to conventional dairy-based ice cream formulations. As such, the vegan ice cream formulations using the fat composition according to the invention represent improved replacements of conventional dairy-based ice cream formulations compared to existing vegan ice cream formulations.

The term "fat" refers to glyceride fats and oils containing fatty acid acyl groups and does not imply any particular melting point. The term "oil" is used synonymously with "fat".

The term "fatty acid" refers to straight chain saturated or unsaturated (including mono- and poly unsaturated) carboxylic acids having from 8 to 24 carbon atoms. A fatty acid having x carbon atoms and y double bonds may be denoted Cx:y. For example, palmitic acid may be denoted C16:0 and oleic acid may be denoted C18:1. The fatty acid profile may be determined by fatty acid methyl ester analysis (FAME) using gas chromatography according to ISO 12966-2 and ISO 12966-4. Thus, percentages of fatty acids in compositions (e.g. palmitic acid (C16:0), stearic acid (C18:0), oleic acid (C18:1) etc.) referred to herein, unless otherwise stated, include both acyl groups such as tri-, di- and mono- glycerides and are based on the total weight of C8 to C24 fatty acid residues.

Triglyceride composition may be determined for example based on molecular weight differences (Carbon Number (CN)) by GC (AOCS Ce 5-86). The notation triglyceride CNxx denotes triglycerides having xx carbon atoms in the fatty acyl groups (thus excluding the carbon atoms from the glycerol, as is standard practice) e.g., CN54 includes tristearin. Amounts of triglycerides specified with each carbon number (CN), as is customary terminology in the art, are percentages by weight based on total triglycerides of CN26 to CN62 present in the fat composition.

The fat composition of the vegan ice cream formulation according to the invention is not, and is not derived from, one or more or animal fats. The fat composition of the vegan ice cream according to the invention may be made from naturally occurring (i.e. in plants or other non-animal sources) or synthetic fats, fractions of naturally occurring or synthetic fats, or mixtures thereof, that satisfy the requirements defined herein. Preferably, the fat composition is, or is derived from, one or more vegetable fats.

It is also preferred that the fat composition of the vegan ice cream according to the invention is, or is derived from non-hydrogenated fats. The term "non-hydrogenated" means that the fat composition is not prepared from a fat that has been subjected to hydrogenation to convert unsaturated fatty acyl groups to saturated fatty acyl groups.

The fat composition of the vegan ice cream according to the invention preferably comprises from 3.5% to 11.0% by weight of total caprylic acid (C8:0) and capric acid (C10:0), more preferably from 4.0% to 10.0% by weight, yet more preferably from 4.5% to 9.5% by weight, even more preferably from 5.0% to 9.0% by weight, yet even more preferably from 5.5% to 8.5% by weight, and most preferably from 6.0% to 8.0% by weight.

The fat composition of the vegan ice cream according to the invention comprises from 18.0% to 45.0% by weight of lauric acid (C12:0), preferably from 18.5% to 40.0%, more preferably from 19.5% to 38.0% by weight, yet more preferably from 20.0% to 36.5% by weight, even more preferably from 20.5% to 35.0% by weight, yet even more preferably from 25.0% to 33.5% by weight, and most preferably from 27.5% to 32.5% by weight.

The fat composition of the vegan ice cream according to the invention comprises from 5.0% to 20.0% by weight of palmitic acid (C16:0), preferably from 6.0% to 18.0% by weight, more preferably from 7.0% to 17.0% by weight, yet more preferably from 8.0% to 16.0% by weight, even more preferably from 9.0% to 15.0% by weight, yet even more preferably from 9.5% to 14.0%, and most preferably from 10.0% to 12.5% by weight.

The fat composition of the vegan ice cream according to the invention comprises from 4.0% to 18.0% by weight of stearic acid (C18:0), preferably from 4.5% to 16.0% by weight, more preferably from 5.0% to 15.0% by weight, yet more preferably from 5.5% to 14.0% by weight, even more preferably from 5.7% to 13.0% by weight, yet even more preferably from 6.0% to 11.0% by weight, and most preferably from 6.3% to 9.0% by weight.

The fat composition of the vegan ice cream according to the invention preferably comprises from 9.0% to 37.0% by weight of oleic acid (C18:1), more preferably from 10.0% to 36.0% by weight, yet more preferably from 11.0% to 35.0% by weight, even more preferably from 12.0% to 34.0% by weight, yet even more preferably from 16.0% to 30.0% by weight, and most preferably from 20.0% to 26.0% by weight.

The fat composition of the vegan ice cream according to the invention preferably comprises from 1.0% to 30.0% by weight of linoleic acid (C18:2), more preferably from 2.0% to 28.0% by weight, yet more preferably from 3.0% to 27.0% by weight, even more preferably from 4.0% to 26.0% by weight, yet even more preferably from 4.5% to 20.0% by weight, and most preferably from 5.0% to 15.0% by weight.

The fat composition of the vegan ice cream according to the invention preferably comprises at most 6.0% by weight of linolenic acid (C18:3), more preferably at most 5.0 by weight, yet more preferably from 0.0% to 4.5% by weight, even more preferably from 0.1% to 4.0% by weight, yet even more preferably from 0.2% to 3.0% by weight, and most preferably from 0.5% to 2.5% by weight.

The fat composition of the vegan ice cream according to the invention preferably comprises from 35.0% to 90.0% by weight of saturated fatty acid (SAFA), more preferably from 40.0% to 88.0% by weight, yet more preferably from 45.0% to 87.0% by weight, even more preferably from 50.0% to 86.0% by weight, yet even more preferably from 55.0% to 80.0%, and most preferably from 60.0% to 70.0%.

The fat composition of the vegan ice cream according to the invention preferably has a content of trans fatty acid residues of less than 2.0% by weight, more preferably less than 1.5% by weight, yet more preferably less than 1.0% by weight, even more preferably less than 0.5% by weight, yet even more preferably less than 0.4% by weight, and most preferable less than 0.3% by weight.

The fat composition of the vegan ice cream according to the invention preferably has an iodine value of from 20 to 90, more preferably from 24 to 85, yet more preferably from 26 to 80, even more preferably from 28 to 75, yet even more preferably from 30 to 70, and most preferably from 32 to 60. The term "iodine value" refers to the number of grams of iodine that could be added to 100g of oil. Iodine value may be calculated according to AOCS Cd 1c-85 based on total acids bound as acyl groups in glycerides in the fat composition being based on the total weight of C8 to C24 fatty acids. Iodine value may alternatively be measured by AOCS Method Cd 1-25.

In a preferred embodiment, the fat composition of the vegan ice cream according to the invention comprises from 3.5% to 11.0% by weight of total caprylic acid (C8:0) and capric acid (C10:0); from 18.5% to 40.0% by weight of lauric acid (C12:0); from 6.0% to 18.0% by weight of palmitic acid (C16:0); from 4.5% to 16.0% by weight of stearic acid (C18:0); from 9.0% to 37.0% by weight of oleic acid (C18: 1); and from 35.0% to 90.0% by weight of saturated fatty acid (SAFA).

In a more preferred embodiment, the fat composition of the vegan ice cream according to the invention comprises from 4.0% to 10.0% by weight of total caprylic acid (C8:0) and capric acid (C10:0); from 19.5% to 38.0% by weight of lauric acid (C12:0); from 7.0% to 17.0% by weight of palmitic acid (C16:0); from 5.0% to 15.0% by weight of stearic acid (C18:0); from 10.0% to 36.0% by weight of oleic acid (C18:1); and from 40.0% to 88.0% by weight of saturated fatty acid (SAFA).

In a yet more preferred embodiment, the fat composition of the vegan ice cream according to the invention comprises from 4.5% to 9.5% by weight of total caprylic acid (C8:0) and capric acid (C10:0); from 20.0% to 36.5% by weight of lauric acid (C12:0); from 8.0% to 16.0% by weight of palmitic acid (C16:0); from 5.5% to 14.0% by weight of stearic acid (C18:0); from 11.0% to 35.0% by weight of oleic acid (C18: 1); and from 45.0% to 87.0% by weight of saturated fatty acid (SAFA).

In an even more preferred embodiment, the fat composition of the vegan ice cream according to the invention comprises from 5.0% to 9.0% by weight of total caprylic acid (C8:0) and capric acid (C10:0); from 20.5% to 35.0% by weight of lauric acid (C12:0); from 9.0% to 15.0% by weight of palmitic acid (C16:0); from 5.7% to 13.0% by weight of stearic acid (C18:0); from 12.0% to 34.0% by weight of oleic acid (C18:1); and from 50.0% to 86.0% by weight of saturated fatty acid (SAFA).

In a yet even more preferred embodiment, the fat composition of the vegan ice cream according to the invention comprises from 5.5% to 8.5% by weight of total caprylic acid (C8:0) and capric acid (C10:0); from 25.0% to 33.5% by weight of lauric acid (C12:0); from 9.5% to 14.0% by weight of palmitic acid (C16:0); from 6.0% to 11.0% by weight of stearic acid (C18:0); from 16.0% to 30.0% by weight of oleic acid (C18:1); and from 55.0% to 80.0% by weight of saturated fatty acid (SAFA).

In a most preferred embodiment, the fat composition of the vegan ice cream according to the invention comprises from 6.0% to 8.0% by weight of total caprylic acid (C8:0) and capric acid (C10:0); from 27.5% to 32.5% by weight of lauric acid (C12:0); from 10.0% to 12.5% by weight of palmitic acid (C16:0); from 6.3% to 9.0% by weight of stearic acid (C18:0); from 20.0% to 26.0% by weight of oleic acid (C18: 1); and from 60.0% to 70.0% by weight of saturated fatty acid (SAFA).

The fat composition of the vegan ice cream according to the invention comprises a weight ratio of lauric acid (C12:0) to stearic acid (C18:0) of from 2.0 to 4.5, preferably from 2.6 to 4.5, more preferably from 2.7 to 4.4, even preferably from 2.8 to 4.3, yet even more preferably from 3.0 to 4.3, and most preferably from 3.2 to 4.3.

The fat composition of the vegan ice cream according to the invention comprises a weight ratio of lauric acid (C12:0) to palmitic acid (C16:0) of from 1.5 to 5.0, preferably from 1.7 to 4.5, more preferably from 1.8 to 4.0, yet more preferably from 1.9 to 3.5, even more preferably from 2.0 to 3.0, yet even more preferably from 2.2 to 3.0, and most preferably from 2.4 to 2.9.

The fat composition of the vegan ice cream according to the invention preferably comprises a weight ratio of stearic acid (C18:0) to palmitic acid (C16:0) of from 0.3 to 1.5, more preferably from 0.4 to 1.3, yet more preferably from 0.5 to 1.1, even more most preferably from 0.5 to 1.0, yet even more preferably from 0.5 to 0.9, and most preferably from 0.5 to 0.8.

In a preferred embodiment, the fat composition of the vegan ice cream according to the invention comprises from 19.5% to 38.0% by weight of lauric acid (C12:0); from 7.0% to 17.0% by weight of palmitic acid (C16:0); from 5.0% to 15.0% by weight of stearic acid (C18:0); a weight ratio of lauric acid (C12:0) to stearic acid (C18:0) of from 2.6 to 4.5; a weight ratio of lauric acid (C12:0) to palmitic acid (C16:0) of from 1.8 to 4.0; and a weight ratio of stearic acid (C18:0) to palmitic acid (C16:0) of from 0.4 to 1.3.

In an more preferred embodiment, the fat composition of the vegan ice cream according to the invention comprises from 20.0% to 36.5% by weight of lauric acid (C12:0); from 8.0% to 16.0% by weight of palmitic acid (C16:0); from 5.5% to 14.0% by weight of stearic acid (C18:0); a weight ratio of lauric acid (C12:0) to stearic acid (C18:0) of from 2.7 to 4.4; a weight ratio of lauric acid (C12:0) to palmitic acid (C16:0) of from 1.9 to 3.5; and a weight ratio of stearic acid (C18:0) to palmitic acid (C16:0) of from 0.5 to 1.1.

In an even more preferred embodiment, the fat composition of the vegan ice cream according to the invention comprises from 20.5% to 35.0% by weight of lauric acid (C12:0); from 9.0% to 15.0% by weight of palmitic acid (C16:0); from 5.7% to 13.0% by weight of stearic acid (C18:0); a weight ratio of lauric acid (C12:0) to stearic acid (C18:0) of from 2.8 to 4.3; a weight ratio of lauric acid (C12:0) to palmitic acid (C16:0) of from 2.0 to 3.0; and a weight ratio of stearic acid (C18:0) to palmitic acid (C16:0) of from 0.5 to 1.0.

In a yet even more preferred embodiment, the fat composition of the vegan ice cream according to the invention comprises from 25.0% to 33.5% by weight of lauric acid (C12:0); from 9.5% to 14.0% by weight of palmitic acid (C16:0); from 6.0% to 11.0% by weight of stearic acid (C18:0); a weight ratio of lauric acid (C12:0) to stearic acid (C18:0) of from 3.0 to 4.3; a weight ratio of lauric acid (C12:0) to palmitic acid (C16:0) of from 2.2 to 3.0; and a weight ratio of stearic acid (C18:0) to palmitic acid (C16:0) of from 0.5 to 0.9.

In a most preferred embodiment, the fat composition of the vegan ice cream according to the invention comprises from 27.5% to 32.5% by weight of lauric acid (C12:0); from 10.0% to 12.5% by weight of palmitic acid (C16:0); from 6.3% to 9.0% by weight of stearic acid (C18:0); a weight ratio of lauric acid (C12:0) to stearic acid (C18:0) of from 3.2 to 4.3; a weight ratio of lauric acid (C12:0) to palmitic acid (C16:0) of from 2.4 to 2.9; and a weight ratio of stearic acid (C18:0) to palmitic acid (C16:0) of from 0.5 to 0.8.

The fat composition of the vegan ice cream according to the invention preferably comprises from 5.0% to 25.0% by weight of total CN32 triglycerides, CN34 triglycerides and CN36 triglycerides, more preferably from 6.0% to 23.0% by weight, yet more preferably from 7.0% to 22.0% by weight, even more preferably from 8.0% to 21.0% by weight, yet even more preferably from 10.0% to 20.0% by weight and most preferably from 13.0% to 19.5% by weight.

The fat composition of the vegan ice cream according to the invention preferably comprises from 10.0% to 45.0% by weight of total CN44 triglycerides, CN46 triglycerides and CN48 triglycerides, more preferably from 10.5% to 43.0% by weight, yet more preferably from 11.0% to 42.0% by weight, even more preferably from 12.0% to 40.0% by weight, yet even more preferably from 13.0% to 39.0%, and most preferably from 17.0% to 28.0% by weight.

The fat composition of the vegan ice cream according to the invention preferably comprises from 2.0% to 12.0% by weight of total CN50 triglycerides and CN52 triglycerides, more preferably from 3.0% to 11.0%, yet more preferably from 4.0% to 10.0% by weight, even more preferably from 4.5% to 10.0% by weight, yet even more preferably from 5.0% to 10.0% by weight, and most preferably 6.0% to 9.0% by weight.

In a preferred embodiment, the fat composition of the vegan ice cream comprises from 19.5% to 38.0% by weight of lauric acid (C12:0); from 7.0% to 17.0% by weight of palmitic acid (C16:0); from 5.0% to 15.0% by weight of stearic acid (C18:0); a weight ratio of lauric acid (C12:0) to stearic acid (C18:0) of from 2.6 to 4.5; and a weight ratio of lauric acid (C12:0) to palmitic acid (C16:0) of from 1.8 to 4.0; said percentages of acid referring to acids bound as acyl groups in glycerides in the fat composition and being based on the total weight of C8 to C24 fatty acids; and from 6.0% to 23.0% by weight of total CN32 triglycerides, CN34 triglycerides and CN36 triglycerides; from 10.5% to 43.0% by weight of total CN44 triglycerides, CN46 triglycerides and CN48 triglycerides; and from 3.0% to 11.0% by weight of total CN50 triglycerides and CN52 triglycerides; based on total triglycerides present in the composition.

In a more preferred embodiment, the fat composition of the vegan ice cream comprises from 20.0% to 36.5% by weight of lauric acid (C12:0); from 8.0% to 16.0% by weight of palmitic acid (C16:0); from 5.5% to 14.0% by weight of stearic acid (C18:0); a weight ratio of lauric acid (C12:0) to stearic acid (C18:0) of from 2.7 to 4.4; and a weight ratio of lauric acid (C12:0) to palmitic acid (C16:0) of from 1.9 to 3.5; said percentages of acid referring to acids bound as acyl groups in glycerides in the fat composition and being based on the total weight of C8 to C24 fatty acids; and from 7.0% to 22.0% by weight of total CN32 triglycerides, CN34 triglycerides and CN36 triglycerides; from 11.0% to 42.0% by weight of total CN44 triglycerides, CN46 triglycerides and CN48 triglycerides; and from 4.0% to 10.0% by weight of total CN50 triglycerides and CN52 triglycerides; based on total triglycerides present in the composition.

In an even more preferred embodiment, the fat composition of the vegan ice cream comprises from 20.5% to 35.0% by weight of lauric acid (C12:0); from 9.0% to 15.0% by weight of palmitic acid (C16:0); from 5.7% to 13.0% by weight of stearic acid (C18:0); a weight ratio of lauric acid (C12:0) to stearic acid (C18:0) of from 2.8 to 4.3; and a weight ratio of lauric acid (C12:0) to palmitic acid (C16:0) of from 2.0 to 3.0; said percentages of acid referring to acids bound as acyl groups in glycerides in the fat composition and being based on the total weight of C8 to C24 fatty acids; and from 8.0% to 21.0% by weight of total CN32 triglycerides, CN34 triglycerides and CN36 triglycerides; from 12.0% to 40.0% by weight of total CN44 triglycerides, CN46 triglycerides and CN48 triglycerides; and from 4.5% to 10.0% by weight of total CN50 triglycerides and CN52 triglycerides; based on total triglycerides present in the composition.

In a yet even more preferred embodiment, the fat composition of the vegan ice cream comprises from 25.0% to 33.5% by weight of lauric acid (C12:0); from 9.5% to 14.0% by weight of palmitic acid (C16:0); from 6.0% to 11.0% by weight of stearic acid (C18:0); a weight ratio of lauric acid (C12:0) to stearic acid (C18:0) of from 3.0 to 4.3; and a weight ratio of lauric acid (C12:0) to palmitic acid (C16:0) of from 2.2 to 3.0; said percentages of acid referring to acids bound as acyl groups in glycerides in the fat composition and being based on the total weight of C8 to C24 fatty acids; and from 10.0% to 20.0% by weight of total CN32 triglycerides, CN34 triglycerides and CN36 triglycerides; from 13.0% to 39.0% by weight of total CN44 triglycerides, CN46 triglycerides and CN48 triglycerides; and from 5.0% to 10.0% by weight of total CN50 triglycerides and CN52 triglycerides; based on total triglycerides present in the composition.

In a most preferred embodiment, the fat composition of the vegan ice cream comprises from 27.5% to 32.5% by weight of lauric acid (C12:0); from 10.0% to 12.5% by weight of palmitic acid (C16:0); from 6.3% to 9.0% by weight of stearic acid (C18:0); a weight ratio of lauric acid (C12:0) to stearic acid (C18:0) of from 3.2 to 4.3; and a weight ratio of lauric acid (C12:0) to palmitic acid (C16:0) of from 2.4 to 2.9; said percentages of acid referring to acids bound as acyl groups in glycerides in the fat composition and being based on the total weight of C8 to C24 fatty acids; and from 13.0% to 19.5% by weight of total CN32 triglycerides, CN34 triglycerides and CN36 triglycerides; from 17.0% to 28.0% by weight of total CN44 triglycerides, CN46 triglycerides and CN48 triglycerides; and from 6.0% to 9.0% by weight of total CN50 triglycerides and CN52 triglycerides; based on total triglycerides present in the composition.

The fat composition of the vegan ice cream according to the invention preferably comprises at most 6.0% by weight of CN32 triglycerides, more preferably from 0.1% to 5.0% by weight, yet more preferably from 0.5% to 4.5% by weight, even more preferably from 1.0% to 4.5% by weight, yet even more preferably from 2.0% to 4.3% by weight, and most preferably from 2.5% to 4.1% by weight.

The fat composition of the vegan ice cream according to the invention preferably comprises at most 8.0% by weight of CN34 triglycerides, more preferably from 0.1% to 7.0% by weight, yet more preferably from 1.0% to 6.0% by weight, even more preferably from 2.0% to 6.0% by weight, yet even more preferably from 2.5% to 6.0% by weight, and most preferably 3.0% to 6.0% by weight.

The fat composition of the vegan ice cream according to the invention preferably comprises from 3.0% to 15.0% by weight of CN36 triglycerides, more preferably from 4.0% to 14.0% by weight, yet more preferably from 5.0% to 12.0% by weight, even preferably from 6.0 % to 11.0% by weight, yet even more preferably 6.5% to 10.0% by weight, and most preferably from 7.0% to 9.5% by weight.

The fat composition of the vegan ice cream according to the invention preferably comprises from 7.0% to 20.0% by weight of CN42 triglycerides, more preferably from 7.5% to 19.0% by weight, yet more preferably from 8.0% to 18.0% by weight, even more preferably from 8.5% to 17.0% by weight, yet even more preferably from 9.0% to 16.0% by weight, and most preferably from 9.5% to 15.0% by weight.

The fat composition of the vegan ice cream according to the invention preferably comprises from 4.0% to 16.0% by weight of CN44 triglycerides, more preferably from 4.5% to 15.0% by weight, yet more preferably from 5.0% to 14.0% by weight, even more preferably from 5.5% to 13.0% by weight, yet more preferably from 6.0% to 12.0% by weight, and most preferably from 7.0% to 11.0% by weight.

The fat composition of the vegan ice cream according to the invention preferably comprises from 3.0% to 15.0% by weight of CN46 triglycerides, more preferably from 3.5% to 14.0% by weight, yet more preferably from 4.0% to 13.0% by weight, even more preferably from 4.5% to 12.0% by weight, yet even more preferably from 5.0% to 10.5% by weight, and most preferably from 5.5% to 9.0% by weight.

The fat composition of the vegan ice cream according to the invention preferably comprises from 2.5% to 17.0% by weight of CN48 triglycerides, more preferably from 3.0% to 16.0% by weight, yet more preferably from 3.5% to 15.0% by weight, even more preferably from 4.0% to 14.0% by weight, yet even more preferably from 4.5% to 12.0% by weight, and most preferably from 5.0% to 10.0% by weight.

The fat composition of the vegan ice cream according to the invention preferably comprises from 0.5% to 9.0% by weight of CN50 triglycerides, more preferably from 1.0% to 8.0% by weight, yet more preferably from 1.5% to 7.0% by weight, even more preferably from 2.0% to 6.0% by weight, yet even more preferably from 2.2% to 5.0% by weight, and most preferably from 2.4% to 4.0% by weight.

The fat composition of the vegan ice cream according to the invention preferably comprises from 2.0% to 10.0% by weight of CN52 triglycerides, more preferably from 2.5% to 9.0% by weight, yet more preferably from 3.0% to 8.0% by weight, even more preferably from 3.5% to 7.0% by weight, yet even more preferably from 3.7% to 6.5% by weight, and most preferably from 3.9% to 6.0% by weight.

In a preferred embodiment, the fat composition of the vegan ice cream according to the invention comprises from 5.0% to 25.0% by weight of total CN32 triglycerides, CN34 triglycerides and CN36 triglycerides; from 10.0% to 45.0% by weight of total CN44 triglycerides, CN46 triglycerides and CN48 triglycerides; from 2.0% to 12.0% by weight of total CN50 triglycerides and CN52 triglycerides; at most 6.0% by weight of CN32 triglycerides; at most 8.0% by weight of CN34 triglycerides; from 7.0% to 20.0% by weight of CN42 triglycerides; from 4.0% to 16.0% by weight of CN44 triglycerides; and from 3.0% to 15.0% by weight of CN46 triglycerides.

In a more preferred embodiment, the fat composition of the vegan ice cream according to the invention comprises from 6.0% to 23.0% by weight of total CN32 triglycerides, CN34 triglycerides and CN36 triglycerides; from 10.5% to 43.0% by weight of total CN44 triglycerides, CN46 triglycerides and CN48 triglycerides; from 3.0% to 11.0% by weight of total CN50 triglycerides and CN52 triglycerides; from 0.1% to 5.0% by weight of CN32 triglycerides; from 0.1% to 7.0% by weight of CN34 triglycerides; from 7.5% to 19.0% by weight of CN42 triglycerides; from 4.5% to 15.0% by weight of CN44 triglycerides; and from 3.5% to 14.0% by weight of CN46 triglycerides.

In an yet more preferred embodiment, the fat composition of the vegan ice cream according to the invention comprises from 7.0% to 22.0% by weight of total CN32 triglycerides, CN34 triglycerides and CN36 triglycerides; from 11.0% to 42.0% by weight of total CN44 triglycerides, CN46 triglycerides and CN48 triglycerides; from 4.0% to 10.0% by weight of total CN50 triglycerides and CN52 triglycerides; from 0.5% to 4.5% by weight of CN32 triglycerides; from 1.0% to 6.0% by weight of CN34 triglycerides; from 8.0% to 18.0% by weight of CN42 triglycerides; from 5.0% to 14.0% by weight of CN44 triglycerides; and from 4.0% to 13.0% by weight of CN46 triglycerides.

In a even more preferred embodiment, the fat composition of the vegan ice cream according to the invention comprises from 8.0% to 21.0% by weight of total CN32 triglycerides, CN34 triglycerides and CN36 triglycerides; from 12.0% to 40.0% by weight of total CN44 triglycerides, CN46 triglycerides and CN48 triglycerides; from 4.5% to 10.0% by weight of total CN50 triglycerides and CN52 triglycerides; from 1.0% to 4.5% by weight of CN32 triglycerides; from 2.0% to 6.0% by weight of CN34 triglycerides; from 8.5% to 17.0% by weight of CN42 triglycerides; from 5.5% to 13.0% by weight of CN44 triglycerides; and from 4.5% to 12.0% by weight of CN46 triglycerides.

In a yet even more preferred embodiment, the fat composition of the vegan ice cream according to the invention comprises from 10.0% to 20.0% by weight of total CN32 triglycerides, CN34 triglycerides and CN36 triglycerides; from 13.0% to 39.0% by weight of total CN44 triglycerides, CN46 triglycerides and CN48 triglycerides; from 5.0% to 10.0% by weight of total CN50 triglycerides and CN52 triglycerides; from 2.0% to 4.3% by weight of CN32 triglycerides; from 2.5% to 6.0% by weight of CN34 triglycerides; from 9.0% to 16.0% by weight of CN42 triglycerides; from 6.0% to 12.0% by weight of CN44 triglycerides; and from 5.0% to 10.5% by weight of CN46 triglycerides.

In a most preferred embodiment, the fat composition of the vegan ice cream according to the invention comprises from 13.0% to 19.5% by weight of total CN32 triglycerides, CN34 triglycerides and CN36 triglycerides; from 17.0% to 28.0% by weight of total CN44 triglycerides, CN46 triglycerides and CN48 triglycerides; from 6.0% to 9.0% by weight of total CN50 triglycerides and CN52 triglycerides; from 2.5% to 4.1% by weight of CN32 triglycerides; from 3.0% to 6.0% by weight of CN34 triglycerides; from 9.5% to 15.0% by weight of CN42 triglycerides; from 7.0% to 11.0% by weight of CN44 triglycerides; and from 5.5% to 9.0% by weight of CN46 triglycerides.

The solid fat contents of the fat composition of the vegan ice cream according to the invention are measured on unstabilized fat according to ISO 8292-1.

The fat composition of the vegan ice cream according to the invention preferably has from 30.0 to 65.0 solid fat content at 10°C, more preferably from 32.0 to 60.0, yet more preferably from 33.0 to 57.0, even more preferably from 34.0 to 55.0, yet even more preferably from 36.0 to 53.0, and most preferably from 38.0 to 52.0.

The fat composition of the vegan ice cream according to the invention preferably has from 10.0 to 40.0 solid fat content at 20°C, more preferably from 11.0 to 35.0, yet more preferably from 11.5 to 32.0, even more preferably from 12.0 to 30.0, yet even more preferably from 14.0 to 27.0, and most preferably from 16.0 to 25.0.

The fat composition of the vegan ice cream according to the invention preferably has at most 20.0 solid fat content at 25°C, more preferably from 1.0 to 19.0, yet more preferably from 2.0 to 18.0, even more preferably from 3.0 to 15.0, yet even more preferably from 5.0 to 14.0, and most preferably from 7.0 to 13.0.

The fat composition of the vegan ice cream according to the invention preferably has at most 10.0 solid fat content at 30°C, more preferably at most 8.0, yet more preferably at most 7.0, even more preferably from 0.0 to 6.0, yet even more preferably from 0.0 to 4.0, and most preferably from 0.1 to 1.0.

The fat composition of the vegan ice cream according to the invention preferably has at most 5.0 solid fat content at 35°C, more preferably at most 4.0, yet more preferably at most 3.0, even more preferably from 0.0 to 2.0, yet even more preferably 0.0 to 1.5, and most preferably from 0.0 to 0.9.

In a preferred embodiment, the fat composition of the vegan ice cream according to the invention has from 30.0 to 65.0 solid fat content at 10°C; from 10.0 to 40.0 solid fat content at 20°C; at most 20.0 solid fat content at 25°C; at most 10.0 solid fat content at 30°C; and at most 5.0 solid fat content at 35°C.

In a more preferred embodiment, the fat composition of the vegan ice cream according to the invention has from 32.0 to 60.0 solid fat content at 10°C; from 11.0 to 35.0 solid fat content at 20°C; from 1.0 to 19.0 solid fat content at 25°C; at most 8.0 solid fat content at 30°C; and at most 4.0 solid fat content at 35°C.

In a yet more preferred embodiment, the fat composition of the vegan ice cream according to the invention has from 33.0 to 57.0 solid fat content at 10°C; from 11.5 to 32.0 solid fat content at 20°C; from 2.0 to 18.0 solid fat content at 25°C; at most 7.0 solid fat content at 30°C; and at most 3.0 solid fat content at 35°C.

In an even more preferred embodiment, the fat composition of the vegan ice cream according to the invention has from 34.0 to 55.0 solid fat content at 10°C; from 12.0 to 30.0 solid fat content at 20°C; from 3.0 to 15.0 solid fat content at 25°C; from 0.0 to 6.0 solid fat content at 30°C; and from 0.0 to 2.0 solid fat content at 35°C.

In a yet even more preferred embodiment, the fat composition of the vegan ice cream according to the invention has from 36.0 to 53.0 solid fat content at 10°C; from 14.0 to 27.0 solid fat content at 20°C; from 5.0 to 14.0 solid fat content at 25°C; from 0.0 to 4.0 solid fat content at 30°C; and from 0.0 to 1.5 solid fat content at 35°C.

In a most preferred embodiment, the fat composition of the vegan ice cream according to the invention has from 38.0 to 52.0 solid fat content at 10°C; from 16.0 to 25.0 solid fat content at 20°C; from 7.0 to 13.0 solid fat content at 25°C; from 0.1 to 1.0 solid fat content at 30°C; and from 0.0 to 0.9 solid fat content at 35°C.

In a preferred embodiment, the non-hydrogenated fat composition of the vegan ice cream according to the invention comprises from 4.0% to 10.0% by weight of total caprylic acid (C8:0) and capric acid (C10:0); from 19.5% to 38.0% by weight of lauric acid (C12:0); from 7.0% to 17.0% by weight of palmitic acid (C16:0); from 5.0% to 15.0% by weight of stearic acid (C18:0); from 10.0% to 36.0% by weight of oleic acid (C18:1); from 40.0% to 88.0% by weight of saturated fatty acid (SAFA); a weight ratio of lauric acid (C12:0) to stearic acid (C18:0) of from 2.6 to 4.5; a weight ratio of lauric acid (C12:0) to palmitic acid (C16:0) of from 1.8 to 4.0; and a weight ratio of stearic acid (C18:0) to palmitic acid (C16:0) of from 0.4 to 1.3; said percentages of acid referring to acids bound as acyl groups in glycerides in the fat composition and being based on the total weight of C8 to C24 fatty acids; and from 6.0% to 23.0% by weight of total CN32 triglycerides, CN34 triglycerides and CN36 triglycerides; from 10.5% to 43.0% by weight of total CN44 triglycerides, CN46 triglycerides and CN48 triglycerides; from 3.0% to 11.0% by weight of total CN50 triglycerides and CN52 triglycerides; from 0.1% to 5.0% by weight of CN32 triglycerides; from 0.1% to 7.0% by weight of CN34 triglycerides; from 7.5% to 19.0% by weight of CN42 triglycerides; from 4.5% to 15.0% by weight of CN44 triglycerides; and from 3.5% to 14.0% by weight of CN46 triglycerides; based on total triglycerides present in the composition; and having from 32.0 to 60.0 solid fat content at 10°C; from 11.0 to 35.0 solid fat content at 20°C; from 1.0 to 19.0 solid fat content at 25°C; at most 8.0 solid fat content at 30°C; and at most 4.0 solid fat content at 35°C; wherein the solid fat content is measured on unstabilized fat according to ISO 8292-1.

In a more preferred embodiment, the non-hydrogenated fat composition of the vegan ice cream of the vegan ice cream according to the invention comprises from 4.5% to 9.5% by weight of total caprylic acid (C8:0) and capric acid (C10:0); from 20.0% to 36.5% by weight of lauric acid (C12:0); from 8.0% to 16.0% by weight of palmitic acid (C16:0); from 5.5% to 14.0% by weight of stearic acid (C18:0); from 11.0% to 35.0% by weight of oleic acid (C18:1); from 45.0% to 87.0% by weight of saturated fatty acid (SAFA); a weight ratio of lauric acid (C12:0) to stearic acid (C18:0) of from 2.7 to 4.4; a weight ratio of lauric acid (C12:0) to palmitic acid (C16:0) of from 1.9 to 3.5; and a weight ratio of stearic acid (C18:0) to palmitic acid (C16:0) of from 0.5 to 1.1; said percentages of acid referring to acids bound as acyl groups in glycerides in the fat composition and being based on the total weight of C8 to C24 fatty acids; and from 7.0% to 22.0% by weight of total CN32 triglycerides, CN34 triglycerides and CN36 triglycerides; from 11.0% to 42.0% by weight of total CN44 triglycerides, CN46 triglycerides and CN48 triglycerides; from 4.0% to 10.0% by weight of total CN50 triglycerides and CN52 triglycerides; from 0.5% to 4.5% by weight of CN32 triglycerides; from 1.0% to 6.0% by weight of CN34 triglycerides; from 8.0% to 18.0% by weight of CN42 triglycerides; from 5.0% to 14.0% by weight of CN44 triglycerides; and from 4.0% to 13.0% by weight of CN46 triglycerides; based on total triglycerides present in the composition; and having from 33.0 to 57.0 solid fat content at 10°C; from 11.5 to 32.0 solid fat content at 20°C; from 2.0 to 18.0 solid fat content at 25°C; at most 7.0 solid fat content at 30°C; and at most 3.0 solid fat content at 35°C; wherein the solid fat content is measured on unstabilized fat according to ISO 8292-1.

In an even more preferred embodiment, the non-hydrogenated fat composition of the vegan ice cream according to the invention comprises from 5.0% to 9.0% by weight of total caprylic acid (C8:0) and capric acid (C10:0); from 20.5% to 35.0% by weight of lauric acid (C12:0); from 9.0% to 15.0% by weight of palmitic acid (C16:0); from 5.7% to 13.0% by weight of stearic acid (C18:0); from 12.0% to 34.0% by weight of oleic acid (C18:1); from 50.0% to 86.0% by weight of saturated fatty acid (SAFA); a weight ratio of lauric acid (C12:0) to stearic acid (C18:0) of from 2.8 to 4.3; a weight ratio of lauric acid (C12:0) to palmitic acid (C16:0) of from 2.0 to 3.0; and a weight ratio of stearic acid (C18:0) to palmitic acid (C16:0) of from 0.5 to 1.0; said percentages of acid referring to acids bound as acyl groups in glycerides in the fat composition and being based on the total weight of C8 to C24 fatty acids; and from 8.0% to 21.0% by weight of total CN32 triglycerides, CN34 triglycerides and CN36 triglycerides; from 12.0% to 40.0% by weight of total CN44 triglycerides, CN46 triglycerides and CN48 triglycerides; from 4.5% to 10.0% by weight of total CN50 triglycerides and CN52 triglycerides; from 1.0% to 4.5% by weight of CN32 triglycerides; from 2.0% to 6.0% by weight of CN34 triglycerides; from 8.5% to 17.0% by weight of CN42 triglycerides; from 5.5% to 13.0% by weight of CN44 triglycerides; and from 4.5% to 12.0% by weight of CN46 triglycerides; based on total triglycerides present in the composition; and having from 34.0 to 55.0 solid fat content at 10°C; from 12.0 to 30.0 solid fat content at 20°C; from 3.0 to 15.0 solid fat content at 25°C; from 0.0 to 6.0 solid fat content at 30°C; and from 0.0 to 2.0 solid fat content at 35°C; wherein the solid fat content is measured on unstabilized fat according to ISO 8292-1.

In a yet even more preferred embodiment, the non-hydrogenated fat composition of the vegan ice cream according to the invention comprises from 5.5% to 8.5% by weight of total caprylic acid (C8:0) and capric acid (C10:0); from 25.0% to 33.5% by weight of lauric acid (C12:0); from 9.5% to 14.0% by weight of palmitic acid (C16:0); from 6.0% to 11.0% by weight of stearic acid (C18:0); from 16.0% to 30.0% by weight of oleic acid (C18:1); from 55.0% to 80.0% by weight of saturated fatty acid (SAFA); a weight ratio of lauric acid (C12:0) to stearic acid (C18:0) of from 3.0 to 4.3; a weight ratio of lauric acid (C12:0) to palmitic acid (C16:0) of from 2.2 to 3.0; and a weight ratio of stearic acid (C18:0) to palmitic acid (C16:0) of from 0.5 to 0.9; said percentages of acid referring to acids bound as acyl groups in glycerides in the fat composition and being based on the total weight of C8 to C24 fatty acids; and from 10.0% to 20.0% by weight of total CN32 triglycerides, CN34 triglycerides and CN36 triglycerides; from 13.0% to 39.0% by weight of total CN44 triglycerides, CN46 triglycerides and CN48 triglycerides; from 5.0% to 10.0% by weight of total CN50 triglycerides and CN52 triglycerides; from 2.0% to 4.3% by weight of CN32 triglycerides; from 2.5% to 6.0% by weight of CN34 triglycerides; from 9.0% to 16.0% by weight of CN42 triglycerides; from 6.0% to 12.0% by weight of CN44 triglycerides; and from 5.0% to 10.5% by weight of CN46 triglycerides; based on total triglycerides present in the composition; and having from 36.0 to 53.0 solid fat content at 10°C; from 14.0 to 27.0 solid fat content at 20°C; from 5.0 to 14.0 solid fat content at 25°C; from 0.0 to 4.0 solid fat content at 30°C; and from 0.0 to 1.5 solid fat content at 35°C; wherein the solid fat content is measured on unstabilized fat according to ISO 8292-1.

In a most preferred embodiment, the non-hydrogenated fat composition of the vegan ice cream according to the invention comprises from 6.0% to 8.0% by weight of total caprylic acid (C8:0) and capric acid (C10:0); from 27.5% to 32.5% by weight of lauric acid (C12:0); from 10.0% to 12.5% by weight of palmitic acid (C16:0); from 6.3% to 9.0.0% by weight of stearic acid (C18:0); from 20.0% to 26.0% by weight of oleic acid (C18:1); from 60.0% to 70.0% by weight of saturated fatty acid (SAFA); a weight ratio of lauric acid (C12:0) to stearic acid (C18:0) of from 3.2 to 4.3; a weight ratio of lauric acid (C12:0) to palmitic acid (C16:0) of from 2.4 to 2.9; and a weight ratio of stearic acid (C18:0) to palmitic acid (C16:0) of from 0.5 to 0.8; said percentages of acid referring to acids bound as acyl groups in glycerides in the fat composition and being based on the total weight of C8 to C24 fatty acids; and from 13.0% to 19.5% by weight of total CN32 triglycerides, CN34 triglycerides and CN36 triglycerides; from 17.0% to 28.0% by weight of total CN44 triglycerides, CN46 triglycerides and CN48 triglycerides; from 6.0% to 9.0% by weight of total CN50 triglycerides and CN52 triglycerides; from 2.5% to 4.1% by weight of CN32 triglycerides; from 3.0% to 6.0% by weight of CN34 triglycerides; from 9.5% to 16.0% by weight of CN42 triglycerides; from 7.0% to 11.0% by weight of CN44 triglycerides; and from 5.5% to 9.0% by weight of CN46 triglycerides; based on total triglycerides present in the composition; and having from 38.0 to 52.0 solid fat content at 10°C; from 16.0 to 25.0 solid fat content at 20°C; from 7.0 to 13.0 solid fat content at 25°C; from 0.1 to 1.0 solid fat content at 30°C; and from 0.0 to 0.9 solid fat content at 35°C; wherein the solid fat content is measured on unstabilized fat according to ISO 8292-1.

The fat composition of the vegan ice cream according to the invention comprises an interesterified fat blend of at least a lauric fat wherein the lauric fat in the blend is at least 50% by weight, preferably from 56% to 85% by weight, more preferably from 58% to 80%, and even more preferably 65% to 78% by weight of the blend. The lauric fat is preferably selected from a group consisting of coconut oil, palm kernel oil, a fraction thereof and a mixture thereof. More preferably, the lauric fat is coconut oil.

In a preferred embodiment, the fat composition according to the invention comprises an interesterified fat blend of cocoa butter and coconut oil. In a more preferred embodiment, the fat composition according to the invention comprises an interesterified fat blend of cocoa butter and coconut oil wherein the weight ratio of cocoa butter to coconut oil is from 42:58 to 20:80, more preferably from 30:70 to 20:80. The fat composition according to the invention preferably further contains a liquid oil which may be selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, coconut oil, a fraction thereof and a mixture thereof. Preferably, the liquid oil is selected from the group consisting of coconut oil, rapeseed oil, a fraction thereof and a mixture thereof; more preferably a mixture of coconut oil and rapeseed oil. In preferred embodiments, the fat composition according to the invention further contains from 5% to 45% by weight of the liquid oil, more preferably from 15% to 40% by weight of the liquid oil, such as a mixture of rapeseed oil and coconut oil.

In another embodiment, the fat composition according to the invention comprises an interesterified fat blend of cocoa butter, coconut oil and a liquid oil. The liquid oil is preferably selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, a fraction thereof and a mixture thereof. More preferably, the fat composition according to the invention comprises or consists of an interesterified fat blend of from 58% to 80% by weight of coconut oil; from 10% to 40% by weight of cocoa butter; and from 2% to 30% by weight of liquid oil, such as rapeseed oil.

The term "lauric fat" refers to a fat containing a significant amount of lauric acid (C12:0), such as at least 25% by weight of lauric acid (C12:0) and preferably at least 35% by weight, typically derived from sources such as coconut oil or palm kernel oil. The term "non-lauric fat" refers to a fat containing no or trace of lauric acid (C12:0), typically less than 2% by weight in the fat. The term "liquid oil" refers to an oil which is liquid at room temperature, typically such as sunflower oil, rapeseed oil or soybean oil.

The invention also relates to a process for making the fat composition according to the invention comprising the steps of: a) providing a lauric fat, preferably selected from a group consisting of coconut oil, palm kernel oil, a fraction thereof and a mixture thereof, more preferably coconut oil; b) providing a non-lauric fat, preferably selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, palm oil, palm stearin, palm olein, cottonseed oil, fully hydrogenated palm oil, fully hydrogenated palm stearin, a fraction thereof and a mixture thereof, more preferably cocoa butter; c) blending the lauric fat of step a) and the one or more non-lauric fat of step b), wherein the weight percentage of the lauric fat in the blend is at least 50% by weight, preferably from 56% to 85% by weight and more preferably from 58% to 80% by weight, such as from 65% to 78% by weight; d) interesterifying the blend formed in step c); and e) blending the interesterified fat blend formed in step d) with a liquid oil preferably selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, a fraction thereof and a mixture thereof; more preferably a mixture of coconut oil and rapeseed oil.

Alternatively, the process for making the fat composition according to the invention comprises the steps of: a) providing a lauric fat, preferably selected from a group consisting of coconut oil, palm kernel oil, a fraction thereof and a mixture thereof, preferably coconut oil; b) providing a non-lauric fat, preferably selected from a group consisting of cocoa butter, shea butter, illipe butter, sal butter, kokum fat, mango fat, high stearic sunflower oil, high stearic soybean oil, high stearic rapeseed oil, high stearic canola oil, allanblackia fat, pentadesma fat, sonchy fat, palm oil, palm stearin, palm olein, cottonseed oil, fully hydrogenated palm oil, fully hydrogenated palm stearin, a fraction thereof and a mixture thereof, preferably cocoa butter; c) providing a liquid oil selected from a group consisting of sunflower oil, high oleic sunflower oil, high oleic rapeseed oil, high oleic canola oil, high oleic soybean oil, rapeseed oil, rice oil, soybean oil, chia oil, flaxseed oil, corn oil, safflower oil, olive oil, canola oil, grapeseed oil, pumpkin oil, sesame oil, walnut oil, hazelnut oil, a fraction thereof and a mixture thereof, such as rapeseed oil; d) blending the lauric fat of step a), the non-lauric fat of step b) and the liquid oil of step c), wherein the weight percentage of the lauric fat in the blend is at least 40% by weight, preferably from 45% to 75% by weight and more preferably from 50% to 70% by weight; and e) interesterifying the composition formed in step d).

The interesterification is also typically known as a redistribution of the fatty acid moieties present in a triglyceride oil over its glycerol moieties and may be carried out chemically or enzymatically.

Vegan Ice Cream Formulation according to the invention

The invention relates to a vegan ice cream formulation comprising from 1% to 30% by weight of the fat composition according to the invention and from 45% to 85% by weight of water. Preferably, the vegan ice cream formulation of the invention comprises from 2% to 25% by weight of the fat composition of the vegan ice cream according to the invention and from 50% to 80% by weight of water. More preferably, the vegan ice cream formulation of the invention comprises from 3% to 20% by weight of the fat composition of the vegan ice cream according to the invention and from 55% to 75% by weight of water. Even more preferably, the vegan ice cream formulation of the invention comprises 4% to 15% by weight of the fat composition of the vegan ice cream according to the invention and from 60% to 72% by weight of water. Yet even more preferably, the vegan ice cream formulation of the invention comprises 5% to 12% by weight of the fat composition of the vegan ice cream according to the invention and from 65% to 70% by weight of water. Most preferably, the vegan ice cream formulation of the invention comprises 8% to 10% by weight of the fat composition of the vegan ice cream according to the invention and from 67% to 70% by weight of water.

The skilled person will understand that references to "ice cream formulation" will take its normal meaning in the field of confectionery. In particular, the term may refer to a frozen confection which is a water-continuous fat-dispersed emulsion, and includes ice cream in its frozen form, as well as ice cream prior to freezing. For the avoidance of doubt, the term "ice cream" is used herein to denote a confection which is similar to ice cream even if it would not meet the requirements for such, e.g. level of milk fat, in all jurisdictions.

In preferred embodiments, the ice cream formulation is in frozen form. The term "frozen", as used herein, denotes that the formulation is solidified under freezing conditions to a hardpack or pumpable consistency which is not fluid or semi-fluid.

For the avoidance of doubt, the amounts (e.g. percentages) of phases and ingredients of the ice cream formulation as used herein refer to those in the base ice cream formulation. By "base ice cream formulation", it is meant the ice cream formulation but not including ingredients that will exist non-homogeneously in the confection, e.g. inclusions, such as visibly identifiable viscous flavorings like fudge and caramel swirls, nut pieces, cookie dough pieces, fruit pieces, baked pieces, candies and the like.

The skilled person will understand that references to "vegan" will take its normal meaning in the field of confectionery. In particular, the term may refer to ice cream formulations which are free of components, such as fats, protein or sugars (especially milk fat, milk protein and milk sugar), derived from animals. Vegan ice cream formulations may contain only components which are plant-based or synthetically produced, e.g. either chemically or by microbiological means.

In preferred embodiments, the vegan ice cream formulation of the invention is a plant-based ice cream formulation. The skilled person will understand that references to "plant-based" will take its normal meaning in the field of confectionery. In particular, the term may refer to ice cream formulations which contain only components which are derived from plant sources, such as vegetables, fruits, whole grains, pulses, nuts and seeds.

The vegan ice cream formulation according to the invention may further comprise one or more ingredients selected from emulsifier, flavor, colorant, salt, pH regulator, sugar, syrup, cereal, legume, seed, fruit, nut, plant extract, vegetable juice, plant milk, plant protein, antioxidant, preservative, starch, modified starch, fiber, thickener, stabilizer, probiotic and vitamin.

The vegan ice cream formulation according to the invention preferably comprises from 0.05% to 5.0% by weight of at least one emulsifier, more preferably from 0.05 to 3.0% by weight, even more preferably from 0.1% to 2.0% by weight and most preferably 0.1% to 1.0% by weight, based on the weight of the ice cream formulation. The at least one emulsifier is preferably selected from the group consisting of mono- and/or diglycerides of fatty acids, distilled monoglycerides, lecithins, organic esters of mono- and/or diglycerides of fatty acids, polyglycerol esters, polyglycerolpolyricinoleate, sucrose esters and sucroglycerides, stearoyl-lactylates, 1-2 propanediol esters, sorbitan esters and mixtures thereof. More preferably, the emulsifier comprises lecithin, even more preferably sunflower lecithin, and most preferably hydrolyzed sunflower lecithin.

The vegan ice cream formulation according to the invention preferably contains stabilizers and/or thickeners, which are typically used to slow the melting rate of ice cream in order to provide resistance to structural change on storage, and to improve mouth feel on consumption. Typical stabilizers used include: locust bean gum, tara gum, carrageenan, guar gum, sodium alginate, pectins, xanthan gum, microcrystalline cellulose, citrus fibers and mixtures thereof. The total concentration of stabilizer and/or thickener is preferably 0 to 1% by weight, more preferably 0.02 to 1% by weight, even more preferably 0.05 to 0.6% by weight, and most preferably between 0.1 and 0.4% by weight based on the vegan ice cream formulation.

In preferred embodiments, the vegan ice cream formulation contains an emulsifier and stabilizer in a combined amount of 0.05% to 5.0% by weight, more preferably from 0.05 to 3.0% by weight, even more preferably from 0.1% to 2.0% by weight and most preferably 0.1% to 1.0% by weight, based on the weight of the ice cream formulation.

The vegan ice cream formulation according to the invention preferably comprises flavoring in an amount that will impart a mild, pleasant flavor. The flavoring may be any of the commercial flavors employed in ice cream, such as varying types of cocoa, pure vanilla or artificial flavor, such as vanillin, ethyl vanillin, chocolate, extracts, spices and the like. It will be further appreciated that many flavor variations may be obtained by combinations of the basic flavors. The ice cream formulations are flavored to taste. Suitable flavorants may also include seasoning, such as salt, and imitation fruit or chocolate flavors either singly or in any suitable combination.

The vegan ice cream formulation according to the invention preferably comprises one or more colorants. The colorants are more preferably selected from the group consisting of carotenes, annatto and mixture thereof, even more preferably beta-carotenes. The colorants may be one or more ingredient containing carotenes, annatto, beta-carotenes and mixture thereof, such as carrot juice.

The vegan ice cream formulation according to the invention preferably comprises one or more antioxidants. The antioxidants are more preferably tocopherols and/or natural extracts, such as from tea or oregano.

The vegan ice cream formulation according to the invention preferably comprises one or more preservatives. The preservatives are more preferably sorbic acid, sorbates, benzoates or mixtures thereof.

The vegan ice cream formulation according to the invention comprises a plant-based protein. The term "plant-based protein" refers to a protein originating from any plant source. The plant-based proteins can be used alone or as a mixture chosen from the same source or from different source. The plant-based can also be concentrated or isolated. The plant-based proteins can be of any vegetable or nut sources provided they function to help the creation of a good ice cream microstructure, but are preferably selected from the group consisting of: cotton seed protein, lupin protein, oat protein, sesame seed protein, broad bean protein, horse bean protein, alfalfa protein, clover protein, rice protein, tapioca protein, potato protein, carob protein, corn protein, sunflower protein, fava protein, faba protein, lentil protein, chickpea protein, soybean protein, pea protein, canola protein, wheat protein, rapeseed protein and mixture thereof. More preferably, the plant protein is soybean protein.

The concentration of plant proteins in the vegan ice cream formulation is from 0.1 to 20% by weight, preferably 0.5 to 15% by weight, more preferably 1.0 to 10% by weight, even more preferably 1.5 to 5.0% by weight, and most preferably 2.0% to 3.0% by weight, based on the weight of the vegan ice cream formulation according to the invention.

The vegan ice cream formulation according to the invention preferably comprises one or more plant milks. The term "plant milk" is also known as plant-based liquids, alternative milk, nut milk or vegan milk, and is a plant juice that resembles the color of milk and refers to manufactured, non-dairy beverages made from a water-based plant extract for flavoring and aroma. Preferably, plant milk is selected from a group consisting of almond milk, soy milk, coconut milk, rice milk, oat milk, hemp milk, pea milk, peanut milk, cashew milk, triticale milk, wheat milk, barley milk, spelt milk, millet milk, derives thereof and mixture thereof. More preferably, plant milk is selected from a group consisting of almond milk, soy milk, rice milk, oat milk, hemp milk, pea milk, peanut milk, cashew milk, triticale milk, wheat milk, barley milk, spelt milk, millet milk, derives thereof and mixture thereof. Most preferably, the plant milk is oat milk.

The concentration of plant milk is preferably from 0.5 to 10.0% by weight, more preferably 1.0 to 8.0% by weight, even more preferably 1.5 to 6.0% by weight and most preferably 1.8 to 4.0% by weight, based on the weight of the ice cream formulation.

The vegan ice cream formulation according to the invention comprises a sweetener. The term "sweetener" refers to a substance that is added to food to provide a sweet taste and is well-known in the art. Sweeteners include sucrose (also generally referred to as 'sugar' and which may be provided in refined or unrefined form), glucose, fructose, syrups such as corn syrup and high fructose corn syrup, honey, polyols including erythritol, maltitol, mannitol, sorbitol, lactitol, xylitol, isomalt, propylene glycol, glycerol (glycerin), threitol, galactitol and palatinose, sucralose, potassium acesulfame, acesulfame acid and salts thereof, aspartame, alitame, neotame, advantame, cyclamate, saccharin and salts thereof, neohesperidin, steviol glucosides, fruit extract and combinations thereof. Those skilled in the art will be able to adjust the amount of sweetener, or combination of sweeteners, to achieve a desired degree of sweetness. Preferred sweeteners are sucrose, glucose, fructose, syrups such as corn syrup and high fructose corn syrup.

The vegan ice cream formulation of the invention preferably comprises one or more sweeteners selected from monosaccharides, disaccharides and oligosaccharides. Sweeteners control the amount of ice in the formulations and impact the sweetness of the ice cream. Typical sweeteners include: sucrose, fructose, glucose, maltose, galactose, dextrose, corn syrup, and maltodextrin. The vegan ice cream formulations of the invention more preferably comprise a mixture of sucrose, dextrose and glucose.

The total concentration of sweetener in the vegan ice cream formulation is from 5 to 35% by weight, preferably from 8 to 30% by weight, more preferably from 12 to 25% by weight, even more preferably from 15 to 20% by weight, and most preferably from 17% to 19% by weight, based on the weight of the vegan ice cream formulation according to the invention.

Adjuncts such as wafers, variegates, e.g., viscous, free oil-containing flavorings and sauce/coatings may be included as desired. Some of these may be in the form of inclusions such as viscous flavorings like fudge and caramel, nut pieces, cooking dough pieces, fruit pieces, dark and/or milk chocolate chunks, etc.

In a preferred embodiment, the vegan ice cream formulation according to the invention comprises from 1% to 10% by weight of the fat composition as disclosed herein; from 55% to 65% by weight of water; from 0.1% to 0.5% by weight of emulsifier; from 28% to 36% by weight of sweetener; from 0.1% to 0.5% by weight of stabilizer; from 0.5% to 3.0% by weight of plant-based protein; and from 0.1% to 0.3% by weight of flavor.

In a more preferred embodiment, the vegan ice cream formulation according to the invention comprises from 3% to 8% by weight of the fat composition as disclosed herein; from 57% to 62% by weight of water; from 0.2% to 0.4% by weight of emulsifier; from 30% to 34% by weight of sweetener; from 0.2% to 0.4% by weight of stabilizer; from 1.0% to 2.5% by weight of plant-based protein selected from oat protein, pea protein or the mixture thereof; and from 0.1% to 0.3% by weight of flavor.

In another preferred embodiment, the vegan ice cream formulation according to the invention comprises from 5% to 15% by weight of the fat composition as disclosed herein, from 50% to 70% by weight of water; from 0.4% to 0.8% by weight of emulsifier; from 2% to 6% by weight of almond; from 15% to 35% by weight of sweetener; from 0.1% to 0.3% by weight of stabilizer; from 1% to 3% by weight of plant-based protein; and optionally from 2% to 7% by weight of cocoa.

In another preferred embodiment, the vegan ice cream formulation according to the invention comprises from 7% to 12% by weight of the fat composition as disclosed herein, from 54% to 66% by weight of water; from 0.4% to 0.7% by weight of sunflower lecithin; from 15% to 35% by weight of sweetener; from 0.1% to 0.3% by weight of stabilizer; from 1% to 3% by weight of pea protein; and optionally from 3% to 6% by weight of cocoa.

The ice cream formulation of the invention, when in frozen form, is preferably aerated, i.e. it has an overrun of more than 20% and less than 200%, more preferably an overrun of more than 30% and less than 150%, even more preferably an overrun of more than 40% and less than 100%, and most preferably an overrun of more than 50% and less than 80%. Overrun is defined by the equation below and is measured at atmospheric pressure:

Overrun% = ((density of non-frozen formulation - density of frozen confection)/density of frozen confection) x 100.

All percentages herein are by weight unless otherwise stated or clearly required by context. Unless otherwise stated or clearly required by context, percentages are by weight of the base ice cream formulation.

The invention also relates to a method of making an ice cream formulation according to the invention, comprising the steps of: (a) preparing the fat composition according to the invention; (b) preparing an aqueous phase, preferably including all other ingredients such as emulsifier, flavor, colorant, salt, pH regulator, sugar, syrup, cereal, legume, seed, fruit, nut, plant extract, vegetable juice, plant milk, plant protein, antioxidant, preservative, starch, modified starch, fiber, thickener, stabilizer, probiotic and vitamin; (c) emulsifying the fat composition and the aqueous phase to obtain an emulsion; optionally, (d) pasteurizing the emulsion; optionally, (e) homogenizing the pasteurized emulsion; and, optionally, (f) ageing the emulsion.

Where the ice cream formulation is in frozen form, the method further comprises the step of: (g) freezing the emulsion under conditions suitable for forming ice cream.

The listing or discussion of an apparently prior-published document in this specification should not necessarily be taken as an acknowledgement that the document is part of the state of the art or is common general knowledge.

Preferences and options for a given aspect, embodiment, feature or parameter of the invention should, unless the context indicates otherwise, be regarded as having been disclosed in combination with any and all preferences and options for all other aspects, embodiments, features and parameters of the invention.

The following non-limiting examples illustrate the invention and do not limit its scope in any way. In the examples and throughout this specification, all percentages, parts and ratios are by weight unless indicated otherwise.

## Figures

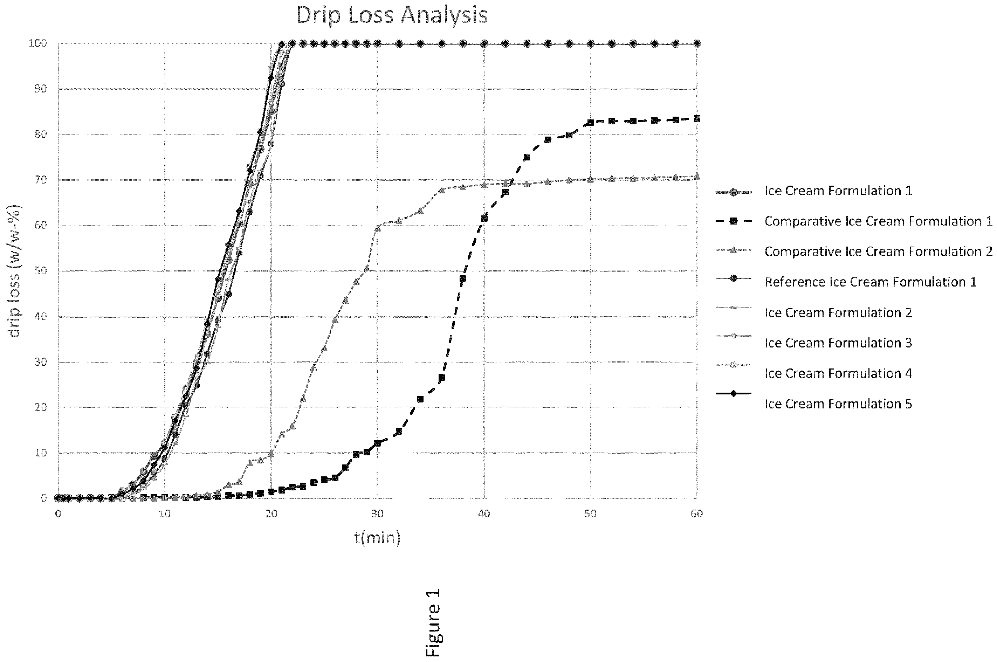

Figure 1 is a plot showing the results of the drip-loss analysis performed in Example 3.

## Examples

Throughout these examples:

US-Nx refers to solid fat content determined by NMR on unstabilised fat at x°C (ISO 8292-1);

Cx:y refers to a fatty acid having x carbon atoms and y double bonds; levels determined by GC-FAME (ISO 12966-2 and ISO 12966-4);

SAFA refers to saturated fatty acids;

MUFA refers to mono-unsaturated fatty acids;

PUFA refers to poly-unsaturated fatty acids;

IV FAME refers to calculated iodine value according to AOCS Cd 1c-85;

TRANS refers to trans fatty acids: unsaturated fatty acids having a double bond in a trans arrangement;

CNxx, refers to a triglyceride having xx carbon atoms (excluding the carbon atoms from the glycerol, as is standard practice), levels determined by GC with pretreatment to remove the diglycerides eventually (AOCS Ce 5-86).

Example 1 - Preparation of Fat Composition 1, Reference Fat Composition 2 and Comparative Fat Compositions 3 and 4

A fat blend of 25% by weight of cocoa butter and 75% by weight of coconut oil was chemically interesterified using sodium methoxide as a catalyst, followed by refining including bleaching and deodorization to form an interesterified Fat Blend G as hardstock. Fat Composition 1 was prepared as a blend of 64% by weight of the interesterified Fat Blend G, 14% by weight of coconut oil and 22% by weight of rapeseed oil.

Reference Fat Composition 2 is a commonly commercially available anhydrous milk fat.

Comparative Fat Composition 3 is commercially available refined coconut oil.

Comparative Fat Composition 4 is a commercially available fat composition Creamelt® 500 obtained from Bunge Loders Croklaan B.V..

The analytical results of Fat Composition 1, Reference Fat Composition 2 and Comparative Fat Compositions 3 and 4 are shown in Table 1.

Table 1: Analytical results of Fat Composition 1, Reference Fat Composition 2 and Comparative Fat Compositions 3 and 4.

| | Fat Composition 1 | Reference Fat Composition 2 | Comparative Fat Composition 3 | Comparative Fat Composition 4 |
|---|---|---|---|---|
| US-N10 | 51.1 | 50.1 | 79.5 | * |
| US-N20 | 23.4 | 19.9 | 39.6 | 47.0 |
| US-N25 | 9.1 | 12.0 | 2.2 | 26.0 |
| US-N30 | 0.3 | 5.7 | 1.0 | 5.0 |
| US-N35 | 0.0 | 0.7 | 0.0 | 1.0 |
| US-N40 | 0.0 | 0.0 | 0.0 | 0.0 |
| C8:0 | 3.8 | 0.9 | 7.5 | 0.0 |
| C10:0 | 3.3 | 2.4 | 6.6 | 0.1 |
| C12:0 | 27.8 | 3.2 | 47.2 | 0.3 |
| C14:0 | 11.6 | 11.3 | 18.2 | 1.3 |
| C16:0 | 11.4 | 33.6 | 8.9 | 41.5 |
| C18:0 | 8.4 | 11.1 | 2.7 | 12.5 |
| C18:1 | 24.3 | 22.8 | 6.5 | 35.7 |
| C18:2 | 6.1 | 2.1 | 1.9 | 6.3 |
| C18:3 | 2.1 | 0.5 | 0.0 | 0.2 |
| SAFA | 66.9 | 66.8 | 91.6 | 56.9 |
| MUFA | 24.8 | 28.6 | 6.5 | 36.5 |
| PUFA | 8.2 | 3.4 | 1.9 | 6.7 |
| C8:0+ C10:0 | 7.1 | 3.3 | 14.1 | 0.1 |
| C12:0/ C18:0 | 3.3 | 0.3 | 17.5 | 0.02 |
| C12:0/ C16:0 | 2.4 | 0.1 | 5.3 | 0.01 |
| C18:0/ C16:0 | 0.7 | 0.3 | 0.3 | 0.3 |
| CN26 | 0.0 | 0.3 | 0.1 | 0.0 |
| CN28 | 0.4 | 0.5 | 0.5 | 0.0 |
| CN30 | 1.4 | 1.0 | 3.0 | 0.0 |
| CN32 | 3.9 | 2.3 | 11.9 | 0.0 |
| CN34 | 5.5 | 5.6 | 16.2 | 0.0 |
| CN36 | 9.2 | 10.4 | 19.3 | 0.0 |
| CN38 | 10.4 | 13.3 | 17.4 | 0.0 |
| CN40 | 9.6 | 10.6 | 11.3 | 0.0 |
| CN42 | 12.1 | 6.7 | 8.1 | 0.1 |
| CN44 | 9.0 | 5.9 | 4.5 | 0.1 |
| CN46 | 6.8 | 6.3 | 2.6 | 0.3 |
| CN48 | 5.8 | 6.1 | 2.1 | 3.9 |
| CN50 | 2.7 | 11.1 | 1.6 | 55.3 |
| CN52 | 4.4 | 11.2 | 1.0 | 30.2 |
| CN54 | 17.6 | 6.9 | 1.0 | 8.7 |
| CN56 | 1.0 | 5.0 | 0.0 | 1.2 |

(continued)

| | Fat Composition 1 | Reference Fat Composition 2 | Comparative Fat Composition 3 | Comparative Fat Composition 4 |
|---|---|---|---|---|
| CN58 | 0.2 | 0.0 | 0.0 | 0.1 |
| C32+C 34+C36 | 18.6 | 18.3 | 47.4 | 0.0 |
| C44+C 46+C48 | 21.6 | 18.3 | 9.2 | 4.3 |
| C50+ C52 | 7.1 | 22.3 | 2.6 | 85.5 |

Example 2 - Production of Ice Cream Formulations containing around 9% or 11% of the (Comparative/Reference) Fat Compositions prepared in Example 1

Ice Cream Formulations (Ice Cream Formulations 1 to 5, Reference Ice Cream Formulation 1, and Comparative Ice Cream Formulations 1 and 2, as listed in Table 2) were prepared using the Fat Compositions, Reference Fat Composition, and Comparative Fat Compositions prepared in Example 1.

Table 2 - Overview of ice cream formulations containing around 9% or 11% fat. The abbreviation "ICF" used in the table stands for Ice Cream Formulations.

| % by weight | ICF1 | Comp. ICF1 | Comp. ICF2 | Ref. ICF1 | ICF2 | ICF3 | ICF4 | ICF5 |
|---|---|---|---|---|---|---|---|---|
| Fat Composition 1 | 9 | * | * | * | 9 | 9 | 9 | 9 |
| Comparative Fat Composition 3 | * | 11 | * | * | * | * | * | * |
| Comparative Fat Composition 4 | * | * | 11 | * | * | * | * | * |
| Reference Fat Composition 2 | * | * | * | 11 | * | * | * | * |
| Oat milk | 2 | * | * | * | * | * | 2 | 2 |
| Lecithin | 0.011 | * | * | * | * | 0.011 | * | 0.011 |
| Soybean Protein | 2.4 | 2.4 | 2.4 | 2.4 | 2.4 | 2.4 | 2.4 | 2.4 |
| Sucrose | 9 | 9 | 9 | 9 | 9 | 9 | 9 | 9 |
| Dextrose | 4 | 4 | 4 | 4 | 4 | 4 | 4 | 4 |
| Glucose Syrup | 5 | 5 | 5 | 5 | 5 | 5 | 5 | 5 |
| Emulsifier-stabiliser | 0.6 | 0.6 | 0.6 | 0.6 | 0.6 | 0.6 | 0.6 | 0.6 |
| Vanillin | 0.1 | 0.1 | 0.1 | 0.1 | 0.1 | 0.1 | 0.1 | 0.1 |
| water | 67.9 | 67.9 | 67.9 | 67.9 | 69.9 | 69.9 | 67.9 | 67.9 |
| Total | 100 | 100 | 100 | 100 | 100 | 100 | 100 | 100 |

The lecithin used was commercially available product of BungeMaxx® S 1000H obtained from Bunge Loders Croklaan B.V.. The soybean protein was PurePro® 90NB. The emulsifier-stabiliser used was Cremodan® Hi-Whip obtained from DuPont Nutrition and Biosciences. The oat milk also named as oat base or oat drink is a commercially available product obtained from Döhler.

In a double jacket vessel, all ingredients except the (Reference/Comparative) Fat Composition were dispersed and hydrated into the water phase (T=52°C; t=20 min). Under high shear, the system was dispersed and the pre-heated, pre-molten (Reference/Comparative) Fat Composition was added dropwise in this period (T=56°C; t=40 min.).

In a pasteurizer, the dispersion was pasteurized, by heating it to T=73°C and holding this temperature for 30 seconds. Subsequently, the dispersion was homogenized (p1=170 bar; p2=50 bar), cooled to T=7.5°C and then aged for t=24h at T=5°C. Freezing was done under continuous operation, at a temperature of T=~3.5°C. The overrun was set at ~65% for all ice cream compositions.

Example 3 - Evaluation of ice cream formulations produced in Example 2

The macroscopic melting properties of each of frozen Ice Cream Formulations 1 to 5, Reference Ice Cream Formulation 1, and Comparative Ice Cream Formulations 1 and 2, as produced in Example 2, was determined according to the following method.

A pre-weighed block of each the (Comparative/Reference) Ice Cream Formulations was placed on a roster at room temperature. Each block of the (Comparative/Reference) Ice Cream Formulations was of the same initial weight, shape and temperature.

Each block of ice cream was allowed to melt, with the melted ice cream being collected in a continuously weighed bucket. The weight of melted ice cream was expressed as a percentage of the initial weight of the block of ice cream, to provide a drop loss percentage (in which 0% represents no melting of an ice cream block, and 100% represents complete melting of an ice cream block).

The results are depicted in Figure 1, which shows that the melting profile of each of Ice Cream Formulations 1 to 5 was almost indistinguishable from that of Reference Ice Cream Formulation 1, whereas Comparative Ice Cream Formulations 1 and 2 showed a very different melting profile. In other words, the plant-based Ice Cream Formulations according to the invention have melting properties which are almost indistinguishable from that of conventional milk-based ice cream, which is contrast to existing plant-based ice cream compositions.

Ice Cream Formulation 1, Reference Ice Cream Formulation 1 and Comparative Ice Cream Formulations 1 and 2 were also subjected to sensory assessment. In a sensory expert panel (n=8), in which the frozen ice cream compositions were tasted, with attributes scored from 0 to 10, Ice Cream Formulation 1 was observed to have highly similar smoothness, hardness, sweetness and creaminess values to Reference Ice Cream Formulation 1. In contrast, Comparative Ice Cream Formulations 1 and 2 were observed to be significantly harder, less smooth, less creamy and less sweet than Reference Ice Cream Formulation 1, indicating that these Comparative Ice Cream Formulations are less suitable as replacements for Reference Ice Cream Formulation 1. The results of sensory evaluation are presented in Table 3.

Table 3 - Sensory evaluation results of Ice Cream Formulation 1, Reference Ice Cream Formulation 1 and Comparative Ice Cream Formulations 1 and 2

| Attribute | Ice Cream Formulation 1 | Ref. Ice Cream Formulation 1 | Comp. Ice Cream Formulation 1 | Comp. Ice Cream Formulation 2 |
|---|---|---|---|---|
| Hardness (score 10 is extremely hard) | 5.5 | 5.9 | 7.9 | 8.4 |
| Smoothness (10 is extremely smooth | 7.2 | 7.2 | 6.1 | 6.6 |
| Sweetness (10 is extremely sweet) | 5.8 | 5.6 | 5.1 | 4.8 |
| Creaminess (10 is extremely creamy) | 5.6 | 5.7 | 4.2 | 4.0 |

**Claims**

1.  A vegan ice cream formulation comprising:

    a fat composition in an amount of from 1% to 30% by weight;
    a plant-based protein in an amount of from 0.1% to 20% by weight;
    a sweetener in an amount of from 5% to 35% by weight; and
    water in an amount of from 45% to 85% by weight;
    wherein the fat composition comprises:

        from 18.0% to 45.0% by weight of lauric acid (C12:0);
        from 5.0% to 20.0% by weight of palmitic acid (C16:0);
        from 4.0% to 18.0% by weight of stearic acid (C18:0);
        a weight ratio of lauric acid (C12:0) to stearic acid (C18:0) of from 2.0 to 4.5; and
        a weight ratio of lauric acid (C12:0) to palmitic acid (C16:0) of from 1.5 to 5.0;
        said percentages of acid referring to acids bound as acyl groups in glycerides in the fat composition and being based on the total weight of C8 to C24 fatty acids;
        wherein the fat composition comprises an interesterified fat blend of at least a lauric fat; and
        wherein the lauric fat in the blend is at least 50% by weight of the blend.

2.  The vegan ice cream formulation according to Claim 1, wherein the fat composition comprises:

    from 3.5% to 11.0% by weight of total caprylic acid (C8:0) and capric acid (C10:0), preferably from 4.0% to 10.0% by weight, more preferably from 4.5% to 9.5% by weight, even more preferably from 5.0% to 9.0% by weight, yet even more preferably from 5.5% to 8.5% by weight, and most preferably from 6.0% to 8.0% by weight; and/or from 18.5% to 40.0% by weight of lauric acid (C12:0), preferably from 19.5% to 38.0% by weight, more preferably from 20.0% to 36.5% by weight, even more preferably from 20.5% to 35.0% by weight, yet even more preferably from 25.0% to 33.5% by weight, and most preferably from 27.5% to 32.5% by weight; and/or from 6.0% to 18.0% by weight of palmitic acid (C16:0), preferably from 7.0% to 17.0% by weight, more preferably from 8.0% to 16.0% by weight, even more preferably from 9.0% to 15.0% by weight, yet even more preferably from 9.5% to 14.0% by weight, and most preferably from 10.0% to 12.5% by weight; and/or from 4.5% to 16.0% by weight of stearic acid (C18:0), preferably from 5.0% to 15.0% by weight, more preferably from 5.5% to 14.0% by weight and even more preferably from 5.7% to 13.0% by weight; and/or from 9.0% to 37.0% by weight of oleic acid (C18:1), preferably from 10.0% to 36.0% by weight, more preferably from 11.0% to 35.0% by weight, even more preferably from 12.0% to 34.0% by weight, yet even more preferably from 16.0% to 30.0% by weight, and most preferably 20.0% to 26.0% by weight; and/or from 35.0% to 90.0% by weight of saturated fatty acid (SAFA), preferably from 40.0% to 88.0% by weight, more preferably from 45.0% to 87.0% by weight, even more preferably from 50.0% to 86.0% by weight, yet even more preferably 55.0% to 80.0% by weight, and most preferably from 60.0% to 70.0% by weight; said percentages of acid referring to acids bound as acyl groups in glycerides in the fat composition and being based on the total weight of C8 to C24 fatty acids.

3. The vegan ice cream formulation according to Claim 1 or Claim 2, wherein the fat composition comprises:

a weight ratio of lauric acid (C12:0) to stearic acid (C18:0) of from 2.6 to 4.5, preferably from 2.7 to 4.4, more preferably from 2.8 to 4.3, even more preferably from 3.0 to 4.3, and most preferably from 3.2 to 4.3; and/or a weight ratio of lauric acid (C12:0) to palmitic acid (C16:0) of from 1.7 to 4.5, preferably from 1.8 to 4.0, more preferably from 1.9 to 3.5, even more preferably from 2.0 to 3.0, yet even more preferably from 2.2 to 3.0, and most preferably 2.4 to 2.9; and/or a weight ratio of stearic acid (C18:0) to palmitic acid (C16:0) of from 0.3 to 1.5, preferably from 0.4 to 1.3, more preferably from 0.5 to 1.1, even more preferably from 0.5 to 1.0, yet even more preferably from 0.5 to 0.9, and most preferably from 0.5 to 0.8; said percentages of acid referring to acids bound as acyl groups in glycerides in the fat composition and being based on the total weight of C8 to C24 fatty acids.

4. The vegan ice cream formulation according to any of the preceding claims, wherein the fat composition comprises:

from 5.0% to 25.0% by weight of total CN32 triglycerides, CN34 triglycerides and CN36 triglycerides, preferably from 6.0% to 23.0% by weight, more preferably from 7.0% to 22.0% by weight, even more preferably from 8.0% to 21.0% by weight, yet even more preferably from 10.0% to 20.0% by weight, and most preferably from 13.0% to 19.5% by weight; and/or from 10.0% to 45.0% by weight of total CN44 triglycerides, CN46 triglycerides and CN48 triglycerides, preferably from 10.5% to 43.0% by weight, more preferably from 11.0% to 42.0% by weight, even more preferably from 12.0% to 40.0% by weight, yet even more preferably from 13.0% to 39.0% by weight, and most preferably from 17.0% to 28.0% by weight; and/or from 2.0% to 12.0% by weight of total CN50 triglycerides and CN52 triglycerides, preferably 3.0% to 11.0% by weight, more preferably from 4.0% to 10.0% by weight, even more preferably from 4.5% to 10.0% by weight, yet even more preferably from 5.0% to 10.0% by weight, and most preferably 6.0% to 9.0% by weight; based on total triglycerides present in the composition.

5. The vegan ice cream formulation according to any of the preceding claims, wherein the fat composition comprises:

at most 6.0% by weight of CN32 triglycerides, preferably from 0.1% to 5.0% by weight, more preferably from 0.5% to 4.5% by weight, even more preferably from 1.0% to 4.5% by weight, yet even more preferably 2.0% to 4.3% by weight, and most preferably from 2.5% to 4.1% by weight; and/or at most 8.0% by weight of CN34 triglycerides, preferably from 0.1% to 7.0% by weight, more preferably from 1.0% to 6.0% by weight, even more preferably from 2.0% to 6.0% by weight, yet even more preferably 2.5% to 6.0% by weight, and most preferably 3.0% to 6.0% by weight; and/or from 7.0% to 20.0% by weight of CN42 triglycerides, preferably from 7.5% to 19.0% by weight, more preferably from 8.0% to 18.0% by weight, even more preferably from 8.5% to 17.0% by weight, yet even more preferably 9.0% to 16.0% by weight, and most preferably 9.5% to 15.0% by weight; and/or

from 4.0% to 16.0% by weight of CN44 triglycerides, preferably from 4.5% to 15.0% by weight, more preferably from 5.0% to 14.0% by weight, even more preferably from 5.5% to 13.0% by weight, yet even more preferably 6.0% to 12.0% by weight, and most preferably 7.0% to 11.0% by weight; and/or
from 3.0% to 15.0% by weight of CN46 triglycerides, preferably from 3.5% to 14.0% by weight, more preferably from 4.0% to 13.0% by weight, even more preferably from 4.5% to 12.0% by weight, yet even more preferably 5.0% to 10.5% by weight, and most preferably 5.5% to 9.0% by weight;
based on total triglycerides present in the composition.

6. The vegan ice cream formulation according to any of the preceding claims, wherein the fat composition has:

from 30.0 to 65.0 solid fat content at 10°C, preferably from 32.0 to 60.0, more preferably from 33.0 to 57.0, even more preferably from 34.0 to 55.0, yet even more preferably from 36.0 to 53.0, and most preferably from 38.0 to 52.0; and/or
from 10.0 to 40.0 solid fat content at 20°C, preferably from 11.0 to 35.0, more preferably from 11.5 to 32.0, even more preferably from 12.0 to 30.0, yet even more preferably 14.0 to 27.0, and most preferably from 16.0 to 25.0; and/or
at most 20.0 solid fat content at 25°C, preferably from 1.0 to 19.0, more preferably from 2.0 to 18.0, even more preferably from 3.0 to 15.0, yet even more preferably from 5.0 to 14.0, and most preferably from 7.0 to 13.0; and/or
at most 10.0 solid fat content at 30°C, preferably at most 8.0, more preferably at most 7.0, even more preferably from 0.0 to 6.0, yet even more preferably from 0.0 to 4.0, and most preferably from 0.1 to 1.0; and/or
at most 5.0 solid fat content at 35°C, preferably at most 4.0, more preferably at most 3.0, even more preferably from 0.0 to 2.0, yet even more preferably from 0.0 to 1.5, and most preferably from 0.0 to 0.9;
measured on unstabilized fat according to ISO 8292-1.

7. The vegan ice cream formulation according to any of the preceding claims, wherein the lauric fat is selected from a group consisting of coconut oil, palm kernel oil, a fraction thereof and a mixture thereof, more preferably wherein the lauric fat is coconut oil; and/or
wherein the lauric fat in the blend is from 56% to 85% by weight, preferably from 58% to 80%, and more preferably 65% to 78% by weight of the blend.

8. The vegan ice cream formulation according to Claim 7, wherein the fat composition further comprises a liquid oil, preferably wherein the liquid oil is selected from the group consisting of coconut oil, rapeseed oil, a fraction thereof and a mixture thereof, more preferably a mixture of coconut oil and rapeseed oil; and/or
preferably wherein the fat composition contains from 5% to 45% by weight of the liquid oil, more preferably from 15% to 40% by weight of the liquid oil.

9. The vegan ice cream formulation according to any of the preceding claims, comprising:

from 2% to 25% by weight by weight of the fat composition, preferably from 3% to 20% by weight, more preferably from 4% to 15% by weight, even more preferably from 5% to 12% by weight, and most preferably from 8% to 10% by weight; and
from 50% to 80% by weight of water, preferably from 55% to 75% by weight, more preferably from 60% to 72% by weight, even more preferably from 65% to 70% by weight, and most preferably from 67% to 70% by weight.

10. The vegan ice cream formulation according to any of the preceding claims, comprising from 0.5% to 15% by weight of the plant-based protein, preferably from 1.0% to 10% by weight, more preferably from 1.5% to 5.0% by weight, and most preferably from 2.0% to 3.0% by weight.

11. The vegan ice cream formulation according to any of the preceding claims, wherein the plant-based protein is selected from the group consisting of cotton seed protein, lupin protein, oat protein, sesame seed protein, broad bean protein, horse bean protein, alfalfa protein, clover protein, rice protein, tapioca protein, potato protein, carob protein, corn protein, sunflower protein, fava protein, faba protein, lentil protein, chickpea protein, soybean protein, pea protein, canola protein, wheat protein, rapeseed protein and mixture thereof, preferably wherein the plant-based protein is soybean protein.

12. The vegan ice cream formulation according to any of the preceding claims, wherein the vegan ice cream formulation comprises from 8% to 30% by weight of the sweetener, preferably from 12% to 25% by weight, more preferably from 15% to 20% by weight, and most preferably from 17% to 19% by weight.

13. The vegan ice cream formulation according to any of the preceding claims, comprising an emulsifier and a stabilizer in a combined amount of 0.05% to 5.0% by weight, more preferably from 0.05 to 3.0% by weight, even more preferably from 0.1% to 2.0% by weight and most preferably 0.1% to 1.0% by weight, based on the weight of the ice cream formulation.

14. The vegan ice cream formulation according to any of the preceding claims, comprising from 0.5 to 10.0% by weight of a plant milk, preferably from 1.0 to 8.0% by weight, more preferably from 1.5% to 6.0% by weight and most preferably from 1.8% to 4.0% by weight; optionally wherein the plant milk is selected from a group consisting of almond milk, soy milk, coconut milk, rice milk, oat milk, hemp milk, pea milk, peanut milk, cashew milk, triticale milk, wheat milk, barley milk, spelt milk, millet milk, derives thereof and mixture thereof and preferably wherein the plant milk is oat milk.

15. Process for making a vegan ice cream formulation according to any of the preceding claims, comprising the steps of:

a) Preparing the fat composition as defined in any of Claims 1 to 8;
b) Mixing the ingredients as defined in any of Claims 1 and 10 to 14 with water to obtain an aqueous phase;
c) Emulsifying the fat composition and the aqueous phase to obtain an emulsion;
d) optionally, pasteurizing the emulsion;
e) optionally, homogenizing the pasteurized emulsion;
f) optionally, ageing the emulsion; and
g) optionally, freezing the emulsion under conditions suitable for forming ice cream.


**Patentansprüche**

1. Vegane Eiscremeformulierung, umfassend:

eine Fettzusammensetzung in einer Menge von 1 Gew.-% bis 30 Gew.-%;
ein pflanzenbasiertes Protein in einer Menge von 0,1 Gew.-% bis 20 Gew.-%;
ein Süßungsmittel in einer Menge von 5 Gew.-% bis 35 Gew.-%; und
Wasser in einer Menge von 45 Gew.-% bis 85 Gew.-%;
wobei die Fettzusammensetzung umfasst:

von 18,0 Gew.-% bis 45,0 Gew.-% Laurinsäure (C12:0);
von 5,0 Gew.-% bis 20,0 Gew.-% Palmitinsäure (C16:0);
von 4,0 Gew.-% bis 18,0 Gew.-% Stearinsäure (C18:0);
ein Gewichtsverhältnis von Laurinsäure (C12:0) zu Stearinsäure (C18:0) von 2,0 bis 4,5; und
ein Gewichtsverhältnis von Laurinsäure (C12:0) zu Palmitinsäure (C16:0) von 1,5 bis 5,0;
wobei sich die Prozentsätze an Säure auf Säuren beziehen, die als Acylgruppen in Glyceriden in der Fettzusammensetzung gebunden sind, und auf das Gesamtgewicht der C8- bis C24-Fettsäuren bezogen sind;
wobei die Fettzusammensetzung eine umgeesterte Fettmischung aus mindestens einem Laurinfett umfasst; und
wobei das Laurinfett in der Mischung mindestens 50 Gew.-% der Mischung beträgt.

2. Vegane Eiscremeformulierung nach Anspruch 1, wobei die Fettzusammensetzung umfasst:

von 3,5 Gew.-% bis 11,0 Gew.-% der gesamten Caprylsäure (C8:0) und Caprinsäure (C10:0), vorzugsweise von 4,0 Gew.-% bis 10,0 Gew.-%, mehr bevorzugt von 4,5 Gew.-% bis 9,5 Gew.-%, noch mehr bevorzugt von 5,0 Gew.-% bis 9,0 Gew.-%, noch weiter bevorzugt von 5,5 Gew.-% bis 8,5 Gew.-%, und am meisten bevorzugt von 6,0 Gew.-% bis 8,0 Gew.-%; und/oder
von 18,5 Gew.-% bis 40,0 Gew.-% Laurinsäure (C12:0), vorzugsweise von 19,5 Gew.-% bis 38,0 Gew.-%, mehr bevorzugt von 20,0 Gew.-% bis 36,5 Gew.-%, noch mehr bevorzugt von 20,5 Gew.-% bis 35,0 Gew.-%, noch weiter bevorzugt von 25,0 Gew.-% bis 33,5 Gew.-% und am meisten bevorzugt von 27,5 Gew.-% bis 32,5 Gew.-%; und/oder
von 6,0 Gew.-% bis 18,0 Gew.-% Palmitinsäure (C16:0), vorzugsweise von 7,0 Gew.-% bis 17,0 Gew.-%, mehr bevorzugt von 8,0 Gew.-% bis 16,0 Gew.-%, noch mehr bevorzugt von 9,0 Gew.-% bis 15,0 Gew.-%, noch weiter bevorzugt von 9,5 Gew.-% bis 14,0 Gew.-% und am meisten bevorzugt von 10,0 Gew.-% bis 12,5 Gew.-%; und/oder

von 4,5 Gew.-% bis 16,0 Gew.-% Stearinsäure (C18:0), vorzugsweise von 5,0 Gew.-% bis 15,0 Gew.-%, mehr bevorzugt von 5,5 Gew.-% bis 14,0 Gew.-% und noch mehr bevorzugt von 5,7 Gew.-% bis 13,0 Gew.-%; und/oder von 9,0 Gew.-% bis 37,0 Gew.-% Ölsäure (C18:1), vorzugsweise von 10,0 Gew.-% bis 36,0 Gew.-%, mehr bevorzugt von 11,0 Gew.-% bis 35,0 Gew.-%, noch mehr bevorzugt von 12,0 Gew.-% bis 34,0 Gew.-%, noch weiter bevorzugt von 16,0 Gew.-% bis 30,0 Gew.-% und am meisten bevorzugt 20,0 Gew.-% bis 26,0 Gew.-%; und/oder

von 35,0 Gew.-% bis 90,0 Gew.-% gesättigte Fettsäure (SAFA), vorzugsweise von 40,0 Gew.-% bis 88,0 Gew.-%, mehr bevorzugt von 45,0 Gew.-% bis 87,0 Gew.-%, noch mehr bevorzugt von 50,0 Gew.-% bis 86,0 Gew.-%, noch weiter bevorzugt 55,0 Gew.-% bis 80,0 Gew.-% und am meisten bevorzugt von 60,0 Gew.-% bis 70,0 Gew.-%;

wobei sich die Prozentsätze an Säure auf Säuren beziehen, die als Acylgruppen in Glyceriden in der Fettzusammensetzung gebunden sind, und auf das Gesamtgewicht der C8- bis C24-Fettsäuren bezogen sind.

3. Vegane Eiscremeformulierung nach Anspruch 1 oder 2, wobei die Fettzusammensetzung umfasst:

ein Gewichtsverhältnis von Laurinsäure (C12:0) zu Stearinsäure (C18:0) von 2,6 bis 4,5, vorzugsweise von 2,7 bis 4,4, mehr bevorzugt von 2,8 bis 4,3, noch mehr bevorzugt von 3,0 bis 4,3 und am meisten bevorzugt von 3,2 bis 4,3; und/oder

ein Gewichtsverhältnis von Laurinsäure (C12:0) zu Palmitinsäure (C16:0) von 1,7 bis 4,5, vorzugsweise von 1,8 bis 4,0, mehr bevorzugt von 1,9 bis 3,5, noch mehr bevorzugt von 2,0 bis 3,0, noch weiter bevorzugt von 2,2 bis 3,0 und am meisten bevorzugt 2,4 bis 2,9; und/oder

ein Gewichtsverhältnis von Stearinsäure (C18:0) zu Palmitinsäure (C16:0) von 0,3 bis 1,5, vorzugsweise von 0,4 bis 1,3, mehr bevorzugt von 0,5 bis 1,1, noch mehr bevorzugt von 0,5 bis 1,0, noch weiter bevorzugt von 0,5 bis 0,9 und am meisten bevorzugt von 0,5 bis 0,8;

wobei sich die Prozentsätze an Säure auf Säuren beziehen, die als Acylgruppen in Glyceriden in der Fettzusammensetzung gebunden sind, und auf das Gesamtgewicht der C8- bis C24-Fettsäuren bezogen sind.

4. Vegane Eiscremeformulierung nach einem der vorstehenden Ansprüche,
wobei die Fettzusammensetzung umfasst:

von 5,0 Gew.-% bis 25,0 Gew.-% der gesamten CN32-Triglyceride, CN34-Triglyceride und CN36-Triglyceride, vorzugsweise von 6,0 Gew.-% bis 23,0 Gew.-%, mehr bevorzugt von 7,0 Gew.-% bis 22,0 Gew.-%, noch mehr bevorzugt von 8,0 Gew.-% bis 21,0 Gew.-%, noch weiter bevorzugt von 10,0 Gew.-% bis 20,0 Gew.-% und am meisten bevorzugt von 13,0 Gew.-% bis 19,5 Gew.-%; und/oder

von 10,0 Gew.-% bis 45,0 Gew.-% der gesamten CN44-Triglyceride, CN46-Triglyceride und CN48-Triglyceride, vorzugsweise von 10,5 Gew.-% bis 43,0 Gew.-%, mehr bevorzugt von 11,0 Gew.-% bis 42,0 Gew.-%, noch mehr bevorzugt von 12,0 Gew.-% bis 40,0 Gew.-%, noch weiter bevorzugt von 13,0 Gew.-% bis 39,0 Gew.-% und am meisten bevorzugt von 17,0 Gew.-% bis 28,0 Gew.-%; und/oder

von 2,0 Gew.-% bis 12,0 Gew.-% der gesamten CN50-Triglyceride und CN52-Triglyceride, vorzugsweise 3,0 Gew.-% bis 11,0 Gew.-%, mehr bevorzugt von 4,0 Gew.-% bis 10,0 Gew.-%, noch mehr bevorzugt von 4,5 Gew.-% bis 10,0 Gew.-%, noch weiter bevorzugt von 5,0 Gew.-% bis 10,0 Gew.-% und am meisten bevorzugt 6,0 Gew.-% bis 9,0 Gew.-%;

bezogen auf die in der Zusammensetzung vorhandenen Gesamttriglyceride.

5. Vegane Eiscremeformulierung nach einem der vorstehenden Ansprüche,
wobei die Fettzusammensetzung umfasst:

höchstens 6,0 Gew.-% CN32-Triglyceride, vorzugsweise von 0,1 Gew.-% bis 5,0 Gew.-%, mehr bevorzugt von 0,5 Gew.-% bis 4,5 Gew.-%, noch mehr bevorzugt von 1,0 Gew.-% bis 4,5 Gew.-%, noch weiter bevorzugt 2,0 Gew.-% bis 4,3 Gew.-% und am meisten bevorzugt von 2,5 Gew.-% bis 4,1 Gew.-%; und/oder

höchstens 8,0 Gew.-% CN34-Triglyceride, vorzugsweise von 0,1 Gew.-% bis 7,0 Gew.-%, mehr bevorzugt von 1,0 Gew.-% bis 6,0 Gew.-%, noch mehr bevorzugt von 2,0 Gew.-% bis 6,0 Gew.-%, noch weiter bevorzugt 2,5 Gew.-% bis 6,0 Gew.-% und am meisten bevorzugt 3,0 Gew.-% bis 6,0 Gew.-%; und/oder

von 7,0 Gew.-% bis 20,0 Gew.-% CN42-Triglyceride, vorzugsweise von 7,5 Gew.-% bis 19,0 Gew.-%, mehr bevorzugt von 8,0 Gew.-% bis 18,0 Gew.-%, noch mehr bevorzugt von 8,5 Gew.-% bis 17,0 Gew.-%, noch weiter bevorzugt 9,0 Gew.-% bis 16,0 Gew.-% und am meisten bevorzugt 9,5 Gew.-% bis 15,0 Gew.-%; und/oder

von 4,0 Gew.-% bis 16,0 Gew.-% CN44-Triglyceride, vorzugsweise von 4,5 Gew.-% bis 15,0 Gew.-%, mehr bevorzugt von 5,0 Gew.-% bis 14,0 Gew.-%, noch mehr bevorzugt von 5,5 Gew.-% bis 13,0 Gew.-%, noch weiter bevorzugt 6,0 Gew.-% bis 12,0 Gew.-% und am meisten bevorzugt 7,0 Gew.-% bis 11,0 Gew.-%; und/oder von 3,0 Gew.-% bis 15,0 Gew.-% CN46-Triglyceride, vorzugsweise von 3,5 Gew.-% bis 14,0 Gew.-%, mehr bevorzugt von 4,0 Gew.-% bis 13,0 Gew.-%, noch mehr bevorzugt von 4,5 Gew.-% bis 12,0 Gew.-%, noch weiter bevorzugt 5,0 Gew.-% bis 10,5 Gew.-% und am meisten bevorzugt 5,5 Gew.-% bis 9,0 Gew.-%; bezogen auf die in der Zusammensetzung vorhandenen Gesamttriglyceride.

6. Vegane Eiscremeformulierung nach einem der vorstehenden Ansprüche, wobei die Fettzusammensetzung aufweist:

von 30,0 bis 65,0 Festfettgehalt bei 10 °C, vorzugsweise von 32,0 bis 60,0, mehr bevorzugt von 33,0 bis 57,0, noch mehr bevorzugt von 34,0 bis 55,0, noch weiter bevorzugt von 36,0 bis 53,0 und am meisten bevorzugt von 38,0 bis 52,0; und/oder von 10,0 bis 40,0 Festfettgehalt bei 20 °C, vorzugsweise von 11,0 bis 35,0, mehr bevorzugt von 11,5 bis 32,0, noch mehr bevorzugt von 12,0 bis 30,0, noch weiter bevorzugt 14,0 bis 27,0, und am meisten bevorzugt von 16,0 bis 25,0; und/oder höchstens 20,0 Festfettgehalt bei 25 °C, vorzugsweise von 1,0 bis 19,0, mehr bevorzugt von 2,0 bis 18,0, noch mehr bevorzugt von 3,0 bis 15,0, noch weiter bevorzugt von 5,0 bis 14,0, und am meisten bevorzugt von 7,0 bis 13,0; und/oder höchstens 10,0 Festfettgehalt bei 30 °C, vorzugsweise höchstens 8,0, mehr bevorzugt höchstens 7,0, noch mehr bevorzugt von 0,0 bis 6,0, noch weiter bevorzugt von 0,0 bis 4,0 und am meisten bevorzugt von 0,1 bis 1,0; und/oder höchstens 5,0 Festfettgehalt bei 35 °C, vorzugsweise höchstens 4,0, mehr bevorzugt höchstens 3,0, noch mehr bevorzugt von 0,0 bis 2,0, noch weiter bevorzugt von 0,0 bis 1,5 und am meisten bevorzugt von 0,0 bis 0,9; gemessen an unstabilisiertem Fett gemäß ISO 8292-1.

7. Vegane Eiscremeformulierung nach einem der vorstehenden Ansprüche,

wobei das Laurinfett aus einer Gruppe ausgewählt ist, bestehend aus Kokosnussöl, Palmkernöl, einer Fraktion davon und einer Mischung davon, mehr bevorzugt wobei das Laurinfett Kokosnussöl ist; und/oder wobei das Laurinfett in der Mischung von 56 Gew.-% bis 85 Gew.-%, vorzugsweise von 58 Gew.-% bis 80 Gew.-% und mehr bevorzugt 65 Gew.-% bis 78 Gew.-% der Mischung ausmacht.

8. Vegane Eiscremeformulierung nach Anspruch 7, wobei die Fettzusammensetzung ferner ein flüssiges Öl umfasst, vorzugsweise wobei das flüssige Öl ausgewählt ist aus der Gruppe bestehend aus Kokosnussöl, Rapsöl, einer Fraktion davon und einer Mischung davon, mehr bevorzugt einer Mischung aus Kokosnussöl und Rapsöl; und/oder vorzugsweise wobei die Fettzusammensetzung von 5 Gew.-% bis 45 Gew.-% flüssiges Öl enthält, mehr bevorzugt von 15 Gew.-% bis 40 Gew.-% flüssiges Öl.

9. Vegane Eiscremeformulierung nach einem der vorstehenden Ansprüche, umfassend:

von 2 Gew.-% bis 25 Gew.-% die Fettzusammensetzung, vorzugsweise von 3 Gew.-% bis 20 Gew.-%, mehr bevorzugt von 4 Gew.-% bis 15 Gew.-%, noch mehr bevorzugt von 5 Gew.-% bis 12 Gew.-% und am meisten bevorzugt von 8 Gew.-% bis 10 Gew.-%; und von 50 Gew.-% bis 80 Gew.-% Wasser, vorzugsweise von 55 Gew.-% bis 75 Gew.-%, mehr bevorzugt von 60 Gew.-% bis 72 Gew.-%, noch mehr bevorzugt von 65 Gew.-% bis 70 Gew.-% und am meisten bevorzugt von 67 Gew.-% bis 70 Gew.-%.

10. Vegane Eiscremeformulierung nach einem der vorstehenden Ansprüche, umfassend von 0,5 Gew.-% bis 15 Gew.-% pflanzenbasiertes Protein, vorzugsweise von 1,0 Gew.-% bis 10 Gew.-%, mehr bevorzugt von 1,5 Gew.-% bis 5,0 Gew.-% und am meisten bevorzugt von 2,0 Gew.-% bis 3,0 Gew.-%.

11. Vegane Eiscremeformulierung nach einem der vorstehenden Ansprüche, wobei das pflanzenbasierte Protein ausgewählt ist aus der Gruppe, bestehend aus Baumwollsamenprotein, Lupinenprotein, Haferprotein, Sesamsamenprotein, Ackerbohnenprotein, Pferdebohnenprotein, Luzernenprotein, Kleeprotein, Reisprotein, Tapiokaprotein, Kartoffelprotein, Johannisbrotprotein, Maisprotein, Sonnenblumenprotein, Favabohnenprotein, Fababohnenprotein, Linsenprotein, Kichererbsenprotein, Sojabohnenprotein, Erbsenprotein, Canolaprotein, Weizenprotein, Rapsprotein und einer Mischung davon, vorzugsweise wobei das pflanzenbasierte Protein Sojabohnenprotein ist.

**12.** Vegane Eiscremeformulierung nach einem der vorstehenden Ansprüche,
wobei die vegane Eiscremeformulierung von 8 Gew.-% bis 30 Gew.-% Süßungsmittel, vorzugsweise von 12 Gew.-% bis 25 Gew.-%, mehr bevorzugt von 15 Gew.-% bis 20 Gew.-% und am meisten bevorzugt von 17 Gew.-% bis 19 Gew.-% umfasst.

**13.** Vegane Eiscremeformulierung nach einem der vorstehenden Ansprüche, umfassend einen Emulgator und einen Stabilisator in einer kombinierten Menge von 0,05 Gew.-% bis 5,0 Gew.-%, mehr bevorzugt von 0,05 Gew.-% bis 3,0 Gew.-%, noch mehr bevorzugt von 0,1 Gew.-% bis 2,0 Gew.-% und am meisten bevorzugt 0,1 Gew.-% bis 1,0 Gew.-%, bezogen auf das Gewicht der Eiscremeformulierung.

**14.** Vegane Eiscremeformulierung nach einem der vorstehenden Ansprüche, umfassend von 0,5 Gew.-% bis 10,0 Gew.-% eine Pflanzenmilch, vorzugsweise von 1,0 Gew.-% bis 8,0 Gew.-%, mehr bevorzugt von 1,5 Gew.-% bis 6,0 Gew.-% und am meisten bevorzugt von 1,8 Gew.-% bis 4,0 Gew.-%; optional wobei die Pflanzenmilch aus einer Gruppe ausgewählt ist, bestehend aus Mandelmilch, Sojamilch, Kokosmilch, Reismilch, Hafermilch, Hanfmilch, Erbsenmilch, Erdnussmilch, Cashewmilch, Triticalemilch, Weizenmilch, Gerstenmilch, Dinkelmilch, Hirsemilch, Derivaten davon und einer Mischung davon, und vorzugsweise wobei die Pflanzenmilch Hafermilch ist.

**15.** Verfahren zur Herstellung einer veganen Eiscremeformulierung nach einem der vorstehenden Ansprüche, umfassend die Schritte:

a) Herstellen der Fettzusammensetzung nach einem der Ansprüche 1 bis 8;
b) Mischen der Inhaltsstoffe, wie in einem der Ansprüche 1 und 10 bis 14 definiert, mit Wasser, um eine wässrige Phase zu erhalten;
c) Emulgieren der Fettzusammensetzung und der wässrigen Phase, um eine Emulsion zu erhalten;
d) optional Pasteurisieren der Emulsion;
e) optional Homogenisieren der pasteurisierten Emulsion;
f) optional Altern der Emulsion; und
g) optional Gefrieren der Emulsion unter Bedingungen, die zur Bildung von Eiscreme geeignet sind.

## Revendications

**1.** Formulation de crème glacée végétalienne comprenant :

une composition de matière grasse en une quantité de 1 % à 30 % en poids ;
une protéine d'origine végétale en une quantité de 0,1 % à 20 % en poids ;
un édulcorant en une quantité de 5 % à 35 % en poids ; et
de l'eau en une quantité de 45 % à 85 % en poids ;
dans laquelle la composition de matière grasse comprend :

de 18,0 % à 45,0 % en poids d'acide laurique (C12:0) ;
de 5,0 % à 20,0 % en poids d'acide palmitique (C16:0) ;
de 4,0 % à 18,0 % en poids d'acide stéarique (C18:0) ;
un rapport pondéral de l'acide laurique (C12:0) à l'acide stéarique (C18:0) allant de 2,0 à 4,5 ; et
un rapport pondéral de l'acide laurique (C12:0) à l'acide palmitique (C16:0) allant de 1,5 à 5,0 ;
lesdits pourcentages d'acide se référant à des acides liés en tant que groupes acyle dans des glycérides dans la composition de matière grasse et étant basés sur le poids total d'acides gras en C8 à C24 ;
dans laquelle la composition de matière grasse comprend un mélange de matière grasse interestérifiée d'au moins une matière grasse laurique ; et
dans laquelle la matière grasse laurique dans le mélange représente au moins 50 % en poids du mélange.

**2.** Formulation de crème glacée végétalienne selon la revendication 1, dans laquelle la composition de matière grasse comprend :

de 3,5 % à 11,0 % en poids d'acide caprylique (C8:0) et d'acide caprique (C10:0) total, de préférence de 4,0 % à 10,0 % en poids, plus préférablement de 4,5 % à 9,5 % en poids, encore plus préférablement de 5,0 % à 9,0 % en poids, plus préférablement encore de 5,5 % à 8,5 % en poids, et le plus préférablement de 6,0 % à 8,0 % en poids ; et/ou

de 18,5 % à 40,0 % en poids d'acide laurique (C12:0), de préférence de 19,5 % à 38,0 % en poids, plus préférablement de 20,0 % à 36,5 % en poids, encore plus préférablement de 20,5 % à 35,0 % en poids, plus préférablement encore de 25,0 % à 33,5 % en poids, et le plus préférablement de 27,5 % à 32,5 % en poids ; et/ou de 6,0 % à 18,0 % en poids d'acide palmitique (C16:0), de préférence de 7,0 % à 17,0 % en poids, plus préférablement de 8,0 % à 16,0 % en poids, encore plus préférablement de 9,0 % à 15,0 % en poids, plus préférablement encore de 9,5 % à 14,0 % en poids, et le plus préférablement de 10,0 % à 12,5 % en poids ; et/ou de 4,5 % à 16,0 % en poids d'acide stéarique (C18:0), de préférence de 5,0 % à 15,0 % en poids, plus préférablement de 5,5 % à 14,0 % en poids et encore plus préférablement de 5,7 % à 13,0 % en poids ; et/ou de 9,0 % à 37,0 % en poids d'acide oléique (C18:1), de préférence de 10,0 % à 36,0 % en poids, plus préférablement de 11,0 % à 35,0 % en poids, encore plus préférablement de 12,0 % à 34,0 % en poids, plus préférablement encore de 16,0 % à 30,0 % en poids, et le plus préférablement 20,0 % à 26,0 % en poids ; et/ou de 35,0 % à 90,0 % en poids d'acide gras saturé (SAFA), de préférence de 40,0 % à 88,0 % en poids, plus préférablement de 45,0 % à 87,0 % en poids, encore plus préférablement de 50,0 % à 86,0 % en poids, plus préférablement encore 55,0 % à 80,0 % en poids, et le plus préférablement de 60,0 % à 70,0 % en poids ; lesdits pourcentages d'acide se référant à des acides liés en tant que groupes acyle dans des glycérides dans la composition de matière grasse et étant basés sur le poids total d'acides gras en C8 à C24.

3. Formulation de crème glacée végétalienne selon la revendication 1 ou la revendication 2, dans laquelle la composition de matière grasse comprend :

un rapport pondéral de l'acide laurique (C12:0) à l'acide stéarique (C18:0) allant de 2,6 à 4,5, de préférence de 2,7 à 4,4, plus préférablement de 2,8 à 4,3, encore plus préférablement de 3,0 à 4,3, et le plus préférablement de 3,2 à 4,3 ; et/ou

un rapport pondéral de l'acide laurique (C12:0) à l'acide palmitique (C16:0) allant de 1,7 à 4,5, de préférence de 1,8 à 4,0, plus préférablement de 1,9 à 3,5, encore plus préférablement de 2,0 à 3,0, plus préférablement encore de 2,2 à 3,0, et le plus préférablement 2,4 à 2,9 ; et/ou

un rapport pondéral de l'acide stéarique (C18:0) à l'acide palmitique (C16:0) allant de 0,3 à 1,5, de préférence de 0,4 à 1,3, plus préférablement de 0,5 à 1,1, encore plus préférablement de 0,5 à 1,0, plus préférablement encore de 0,5 à 0,9, et le plus préférablement de 0,5 à 0,8 ;

lesdits pourcentages d'acide se référant à des acides liés en tant que groupes acyle dans des glycérides dans la composition de matière grasse et étant basés sur le poids total d'acides gras en C8 à C24.

4. Formulation de crème glacée végétalienne selon l'une quelconque des revendications précédentes, dans laquelle la composition de matière grasse comprend :

de 5,0 % à 25,0 % en poids de triglycérides CN32, triglycérides CN34 et triglycérides CN36 totaux, de préférence de 6,0 % à 23,0 % en poids, plus préférablement de 7,0 % à 22,0 % en poids, encore plus préférablement de 8,0 % à 21,0 % en poids, plus préférablement encore de 10,0 % à 20,0 % en poids, et le plus préférablement de 13,0 % à 19,5 % en poids ; et/ou

de 10,0 % à 45,0 % en poids de triglycérides CN44, triglycérides CN46 et triglycérides CN48 totaux, de préférence de 10,5 % à 43,0 % en poids, plus préférablement de 11,0 % à 42,0 % en poids, encore plus préférablement de 12,0 % à 40,0 % en poids, plus préférablement encore de 13,0 % à 39,0 % en poids, et le plus préférablement de 17,0 % à 28,0 % en poids ; et/ou

de 2,0 % à 12,0 % en poids de triglycérides CN50 et triglycérides CN52 totaux, de préférence 3,0 % à 11,0 % en poids, plus préférablement de 4,0 % à 10,0 % en poids, encore plus préférablement de 4,5 % à 10,0 % en poids, plus préférablement encore de 5,0 % à 10,0 % en poids, et le plus préférablement 6,0 % à 9,0 % en poids ; sur la base de triglycérides totaux présents dans la composition.

5. Formulation de crème glacée végétalienne selon l'une quelconque des revendications précédentes, dans laquelle la composition de matière grasse comprend :

au plus 6,0 % en poids de triglycérides CN32, de préférence de 0,1 % à 5,0 % en poids, plus préférablement de 0,5 % à 4,5 % en poids, encore plus préférablement de 1,0 % à 4,5 % en poids, plus préférablement encore 2,0 % à 4,3 % en poids, et le plus préférablement de 2,5 % à 4,1 % en poids ; et/ou

au plus 8,0 % en poids de triglycérides CN34, de préférence de 0,1 % à 7,0 % en poids, plus préférablement de 1,0 % à 6,0 % en poids, encore plus préférablement de 2,0 % à 6,0 % en poids, plus préférablement encore 2,5 % à 6,0 % en poids, et le plus préférablement 3,0 % à 6,0 % en poids ; et/ou

de 7,0 % à 20,0 % en poids de triglycérides CN42, de préférence de 7,5 % à 19,0 % en poids, plus préférablement de 8,0 % à 18,0 % en poids, encore plus préférablement de 8,5 % à 17,0 % en poids, plus préférablement encore 9,0 % à 16,0 % en poids, et le plus préférablement 9,5 % à 15,0 % en poids ; et/ou
de 4,0 % à 16,0 % en poids de triglycérides CN44, de préférence de 4,5 % à 15,0 % en poids, plus préférablement de 5,0 % à 14,0 % en poids, encore plus préférablement de 5,5 % à 13,0 % en poids, plus préférablement encore 6,0 % à 12,0 % en poids, et le plus préférablement 7,0 % à 11,0 % en poids ; et/ou de 3,0 % à 15,0 % en poids de triglycérides CN46, de préférence de 3,5 % à 14,0 % en poids, plus préférablement de 4,0 % à 13,0 % en poids, encore plus préférablement de 4,5 % à 12,0 % en poids, plus préférablement encore 5,0 % à 10,5 % en poids, et le plus préférablement 5,5 % à 9,0 % en poids ;
sur la base de triglycérides totaux présents dans la composition.

6. Formulation de crème glacée végétalienne selon l'une quelconque des revendications précédentes, dans laquelle la composition de matière grasse a :

   de 30,0 à 65,0 de teneur en matière grasse solide à 10 °C, de préférence de 32,0 à 60,0, plus préférablement de 33,0 à 57,0, encore plus préférablement de 34,0 à 55,0, plus préférablement encore de 36,0 à 53,0, et le plus préférablement de 38,0 à 52,0 ; et/ou
   de 10,0 à 40,0 de teneur en matière grasse solide à 20 °C, de préférence de 11,0 à 35,0, plus préférablement de 11,5 à 32,0, encore plus préférablement de 12,0 à 30,0, plus préférablement encore 14,0 à 27,0, et le plus préférablement de 16,0 à 25,0 ; et/ou
   une teneur en matière grasse solide d'au plus 20,0 à 25 °C, de préférence de 1,0 à 19,0, plus préférablement de 2,0 à 18,0, encore plus préférablement de 3,0 à 15,0, plus préférablement encore de 5,0 à 14,0, et le plus préférablement de 7,0 à 13,0 ; et/ou
   une teneur en matière grasse solide d'au plus 10,0 à 30 °C, de préférence au plus 8,0, plus préférablement au plus 7,0, encore plus préférablement de 0,0 à 6,0, plus préférablement encore de 0,0 à 4,0, et le plus préférablement de 0,1 à 1,0 ; et/ou
   une teneur en matière grasse solide d'au plus 5,0 à 35 °C, de préférence au plus 4,0, plus préférablement au plus 3,0, encore plus préférablement de 0,0 à 2,0, plus préférablement encore de 0,0 à 1,5, et le plus préférablement de 0,0 à 0,9 ;
   mesurée sur de la matière grasse non stabilisée selon la norme ISO 8292-1.

7. Formulation de crème glacée végétalienne selon l'une quelconque des revendications précédentes,

   dans laquelle la matière grasse laurique est choisie dans un groupe constitué d'huile de coco, d'huile de cœur de palmier, d'une fraction de celles-ci et d'un mélange de celles-ci, plus préférablement dans laquelle la matière grasse laurique est l'huile de noix de coco ; et/ou
   dans laquelle la graisse laurique dans le mélange représente de 56 % à 85 % en poids, de préférence de 58 % à 80 %, et plus préférablement 65 % à 78 % en poids du mélange.

8. Formulation de crème glacée végétalienne selon la revendication 7, dans laquelle la composition de matière grasse comprend en outre une huile liquide, de préférence dans laquelle l'huile liquide est choisie dans le groupe constitué d'huile de coco, huile de colza, d'une fraction de celles-ci et d'un mélange de celles-ci, plus préférablement un mélange d'huile de coco et d'huile de colza ; et/ou
   de préférence dans laquelle la composition de matière grasse contient de 5 % à 45 % en poids de l'huile liquide, plus préférablement de 15 % à 40 % en poids de l'huile liquide.

9. Formulation de crème glacée végétalienne selon l'une quelconque des revendications précédentes, comprenant :

   de 2 % à 25 % en poids en poids de la composition de matière grasse, de préférence de 3 % à 20 % en poids, plus préférablement de 4 % à 15 % en poids, encore plus préférablement de 5 % à 12 % en poids, et le plus préférablement de 8 % à 10 % en poids ; et
   de 50 % à 80 % en poids d'eau, de préférence de 55 % à 75 % en poids, plus préférablement de 60 % à 72 % en poids, encore plus préférablement de 65 % à 70 % en poids, et le plus préférablement de 67 % à 70 % en poids.

10. Formulation de crème glacée végétalienne selon l'une quelconque des revendications précédentes, comprenant de 0,5 % à 15 % en poids de la protéine d'origine végétale, de préférence de 1,0 % à 10 % en poids, plus préférablement de 1,5 % à 5,0 % en poids, et le plus préférablement de 2,0 % à 3,0 % en poids.

11. Formulation de crème glacée végétalienne selon l'une quelconque des revendications précédentes, dans laquelle la protéine d'origine végétale est choisie dans le groupe constitué de protéine de graine de coton, protéine de lupin, protéine d'avoine, protéine de graine de sésame, protéine de fève, protéine de féverole, protéine de luzerne, protéine de trèfle, protéine de riz, protéine de tapioca, protéine de pomme de terre, protéine de caroube, protéine de maïs, protéine de tournesol, protéine de faba, protéine de gourgane, protéine de lentille, protéine de pois chiche, protéine de soja, protéine de pois, protéine de canola, protéine de blé, protéine de colza et mélange de celles-ci, de préférence dans laquelle la protéine d'origine végétale est une protéine de soja.

12. Formulation de crème glacée végétalienne selon l'une quelconque des revendications précédentes, dans laquelle la formulation de crème glacée végétalienne comprend de 8 % à 30 % en poids de l'édulcorant, de préférence de 12 % à 25 % en poids, plus préférablement de 15 % à 20 % en poids, et le plus préférablement de 17 % à 19 % en poids.

13. Formulation de crème glacée végétalienne selon l'une quelconque des revendications précédentes, comprenant un émulsifiant et un stabilisant en une quantité combinée de 0,05 % à 5,0 % en poids, plus préférablement de 0,05 à 3,0 % en poids, encore plus préférablement de 0,1 % à 2,0 % en poids et le plus préférablement 0,1 % à 1,0 % en poids, sur la base du poids de la formulation de crème glacée.

14. Formulation de crème glacée végétalienne selon l'une quelconque des revendications précédentes, comprenant de 0,5 à 10,0 % en poids d'un lait végétal, de préférence de 1,0 à 8,0 % en poids, plus préférablement de 1,5 % à 6,0 % en poids et le plus préférablement de 1,8 % à 4,0 % en poids ; facultativement dans laquelle le lait végétal est choisi dans un groupe constitué de lait d'amande, lait de soja, lait de coco, lait de riz, lait d'avoine, lait de chanvre, lait de pois, lait d'arachide, lait de cajou, lait de triticale, lait de blé, lait d'orge, lait d'épeautre, lait de millet, dérivés de ceux-ci et mélange de ceux-ci et, de préférence, dans laquelle le lait végétal est du lait d'avoine.

15. Procédé de fabrication d'une formulation de crème glacée végétalienne selon l'une quelconque des revendications précédentes, comprenant les étapes consistant à :

a) préparer la composition de matière grasse telle que définie dans l'une quelconque des revendications 1 à 8 ;
b) mélanger les ingrédients tels que définis dans l'une quelconque des revendications 1 et 10 à 14 avec de l'eau pour obtenir une phase aqueuse ;
c) émulsionner la composition de matière grasse et la phase aqueuse pour obtenir une émulsion ;
d) éventuellement, pasteuriser l'émulsion ;
e) éventuellement, homogénéiser l'émulsion pasteurisée ;
f) éventuellement, faire vieillir l'émulsion ; et
g) éventuellement, congeler l'émulsion dans des conditions appropriées pour la formation de la crème glacée.

Figure 1

Drip Loss Analysis

t(min)

drip loss (w/w-%)

— Ice Cream Formulation 1
— Comparative Ice Cream Formulation 1
— Comparative Ice Cream Formulation 2
— Reference Ice Cream Formulation 1
— Ice Cream Formulation 2
— Ice Cream Formulation 3
— Ice Cream Formulation 4
— Ice Cream Formulation 5

**REFERENCES CITED IN THE DESCRIPTION**

**Patent documents cited in the description**

- WO 2017001266 A
- WO 2017001267 A
- WO 2017001265 A
- KR 1020160057691
- CN 112715738